(19)

Europäisches Patentamt

European Patent Office

Office européen des brevets

(11) **EP 4 707 997 A1**

(12) **EUROPEAN PATENT APPLICATION**
published in accordance with Art. 153(4) EPC

(43) Date of publication:
**11.03.2026  Bulletin 2026/11**

(21) Application number: 24823529.3

(22) Date of filing: 27.03.2024

(51) International Patent Classification (IPC):
*G06F 3/01* (2006.01)      *G06F 3/00* (2006.01)
*G06F 1/16* (2006.01)      *G06T 19/00* (2011.01)
*G06V 40/18* (2022.01)

(52) Cooperative Patent Classification (CPC):
G06F 1/16; G06F 3/00; G06F 3/01; G06T 19/00;
G06V 40/18

(86) International application number:
**PCT/KR2024/003889**

(87) International publication number:
**WO 2024/258008 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 13.06.2023  KR 20230075843
19.10.2023  KR 20230140647

(71) Applicant: Samsung Electronics Co., Ltd.
Suwon-si, Gyeonggi-do 16677 (KR)

(72) Inventors:
• **KIM, Jooyoung**
Suwon-si Gyeonggi-do 16677 (KR)

• **PARK, Eunsol**
Suwon-si Gyeonggi-do 16677 (KR)
• **YEOM, Donghyun**
Suwon-si Gyeonggi-do 16677 (KR)
• **HWANG, Sunpil**
Suwon-si Gyeonggi-do 16677 (KR)
• **KIM, Sungoh**
Suwon-si Gyeonggi-do 16677 (KR)
• **YEO, Hyungsok**
Suwon-si Gyeonggi-do 16677 (KR)

(74) Representative: **HGF**
HGF Limited
4th Floor, 1 City Square
Leeds LS1 2ES (GB)

(54) **ELECTRONIC DEVICE AND METHOD FOR DISPLAYING CONTENT IN VIRTUAL ENVIRONMENT**

(57)    This wearable device may comprise: a first display and a second display; a camera; a processor; and a memory for storing instructions. The instructions, when executed by the processor, may cause the wearable device to: display content having a first displaying size on the first display and the second display so that the content is perceived as being located at a first depth in a three-dimensional (3D) virtual environment; and when the content is displayed for a time period equal to or longer than a reference time, display the content in a second displaying size that is substantially the same as the first displaying size on the first display and the second display so that the content is perceived as being located at a second depth exceeding the first depth in the 3D virtual environment.

FIG. 4A

EP 4 707 997 A1

# Description

[TECHNICAL FIELD]

The disclosure relates to an electronic device for displaying a content in a virtual environment and a method performed by the electronic device.

[BACKGROUND ART]

In order to provide an enhanced user experience, electronic devices have been developed to provide a virtual environment service, which displays information generated by a computer in association with an external object in the real world. Such electronic device may include a wearable device worn by a user. For example, the electronic device may include a user equipment, augmented reality (AR) glasses, or a head-mounted device (HMD).

[DETAILED DESCRIPTION OF INVENTION]

[technical solution]

A wearable device may comprise a display. The wearable device may comprise a camera. The wearable device may comprise a processor. The processor may be configured to display a content having a first size in a first area of a virtual environment, through at least a portion of a display area of the display. The processor may be configured to identify whether a time period a user of the wearable device gazes at the content having the first size is equal to or greater than a reference time, based on the camera. The processor may be configured to, based on identifying that the time period is equal to or greater than the reference time, display, through the at least a portion of the display, the content having a second size different from the first size in a second area of which depth identified from a reference position corresponding to the user in the virtual environment is different from that of the first area.

A wearable device may comprise a display. The wearable device may comprise a camera. The wearable device may comprise a processor. The processor may be configured to display a content displayed in a first area in a virtual environment and having a first size in the virtual environment, through at least a portion of the display. The processor may be configured to identify whether a function for adjusting a focal length is activated. The processor may be configured to maintain displaying the content having the first size in the first area, through the at least a portion, based on identifying that the function is deactivated. The processor may be configured to, based on identifying that the function is activated, for adjusting the focal length, change a position from the first area to a second area having a different depth identified from a reference position in the virtual environment, change a size from the first size to a second size according to adjusting of the focal length, and display the content having the second size in the second area, through the at least a portion. The reference position may indicate a position in the virtual environment corresponding to a user of the wearable device.

A wearable device may comprise a first display positioned with respect to a left eye of a user. The wearable device may comprise a second display positioned with respect to a right eye of the user. The wearable device may comprise at least one processor comprising processing circuitry. The wearable device may comprise memory, comprising one or more storage mediums, storing instructions. The instructions may, when executed by the at least one processor individually or collectively, cause the wearable device to display a content having a first displaying size on the first display and the second display, such that the content is perceived in a 3 dimensional (3D) virtual environment as being positioned at a first depth. The instructions may, when at least one processor individually or collectively, cause the wearable device to, in case that the content is displayed for a time period greater than or equal to a reference time, display the content as a second displaying size on the first display and the second display, the second displaying size being substantially the same as the first displaying size, such that the content is perceived in the 3D virtual environment as being positioned at a second depth greater than the first depth.

[BRIEF DESCRIPTION OF DRAWINGS]

The above and other aspects, features, and advantages of certain embodiments of the disclosure will be more apparent from the following description taken in conjunction with the accompanying drawings, in which:

FIG. 1 illustrates a block diagram of an electronic device in a network environment in accordance with embodiments of the disclosure;
FIG. 2A illustrates an example of a perspective view of a wearable device in accordance with embodiments of the disclosure;
FIG. 2B illustrates an example of one or more hardware in a wearable device in accordance with embodiments of the disclosure;
FIGS. 3A and 3B illustrate examples of a wearable device in accordance with embodiments of the disclosure;
FIG. 4A illustrates an example method of displaying a content based on a focal length in a virtual environment;
FIG. 4B illustrates an example method of displaying a content based on a focal length in a virtual environment, in accordance with embodiments of the disclosure;
FIG. 5 illustrates an example block diagram of a wearable device in accordance with embodiments of the disclosure;

FIG. 6 illustrates an example of a flowchart for a method of displaying a content according to a focal length in a virtual environment, in accordance with embodiments of the disclosure;

FIG. 7 illustrates examples of a display area of a display for representing a content according to a focal length, in accordance with embodiments of the disclosure;

FIG. 8 illustrates an example of an operation flow for a method of adjusting a focal length and obtaining a result of adjustment, based on capability information for the focal length, in accordance with embodiments of the disclosure;

FIG. 9 illustrates an example of a flowchart for a method of displaying a content having a different size according to a focal length in a virtual environment, in accordance with embodiments of the disclosure; and

FIG. 10 illustrates an example of a flowchart for a method of displaying a content according to a depth in a virtual environment, in accordance with embodiments of the disclosure.

[MODE FOR CARRYING OUT INVENTION]

The terms used in the disclosure are merely used to better describe a certain embodiment and may not be intended to limit the scope of other embodiments. A singular expression may include a plural expression, unless the context clearly dictates otherwise. The terms used herein, including technical and scientific terms, may have the same meanings as those commonly understood by those skilled in the art to which the disclosure pertains. Terms defined in a general dictionary amongst the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

As described herein, in various examples of the disclosure described below, a hardware approach will be described as an example. However, since one or more embodiments of the disclosure may include a technology that utilizes both the hardware-based approach and the software-based approach, one or more embodiments of the disclosure are not intended to exclude the software-based approach.

Further, throughout the disclosure, an expression such as e.g., 'more than' or 'less than' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'more than', a condition described as 'less than or equal to' may be replaced with 'less than', and a condition described as 'more than or equal to and less than' may be replaced with 'more than and less than or equal to', respectively. Further, hereinafter, 'A' to 'B' may refer to at least one of the elements from A (including A) to B (including B).

The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. The expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

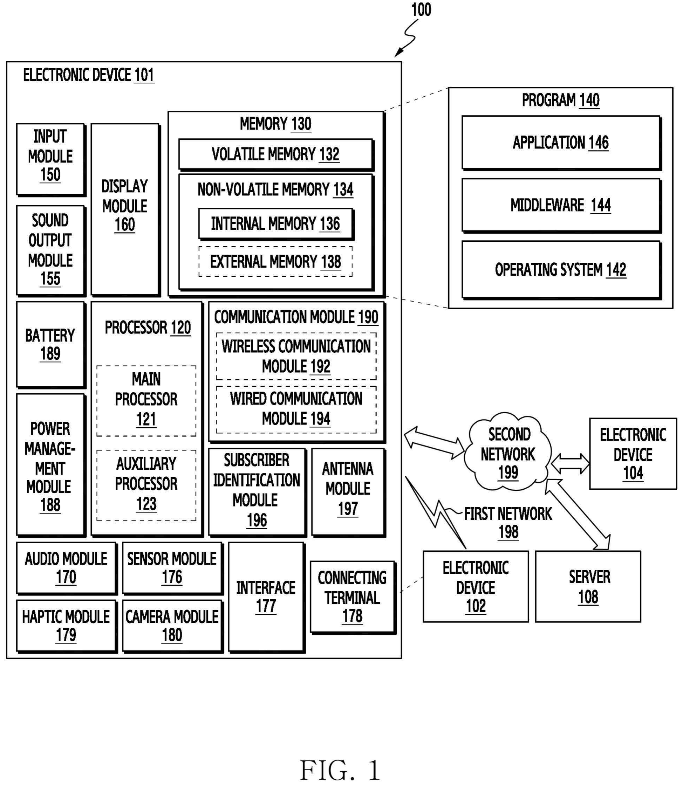

FIG. 1 illustrates a block diagram of an electronic device in a network environment according to in accordance with embodiments of the disclosure.

Referring to FIG. 1, an electronic device (e.g., a wearable device) 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, the processor 120 may correspond to at least one processor. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 (the at least one processor) may include at least one of a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mm Wave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101.

According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to one or more embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another example of the disclosure, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

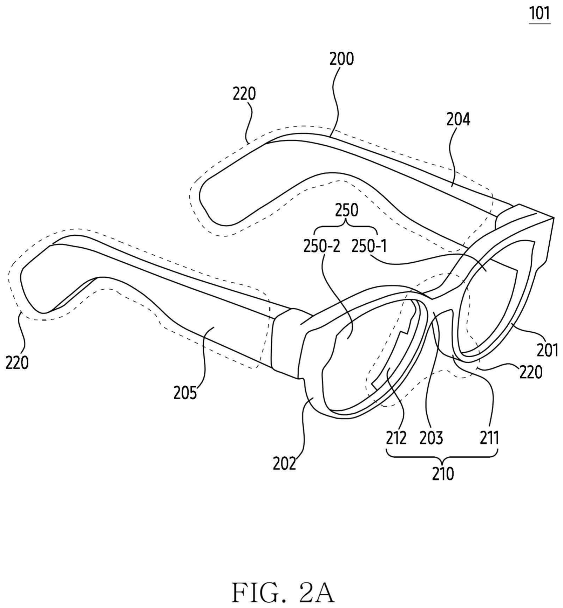

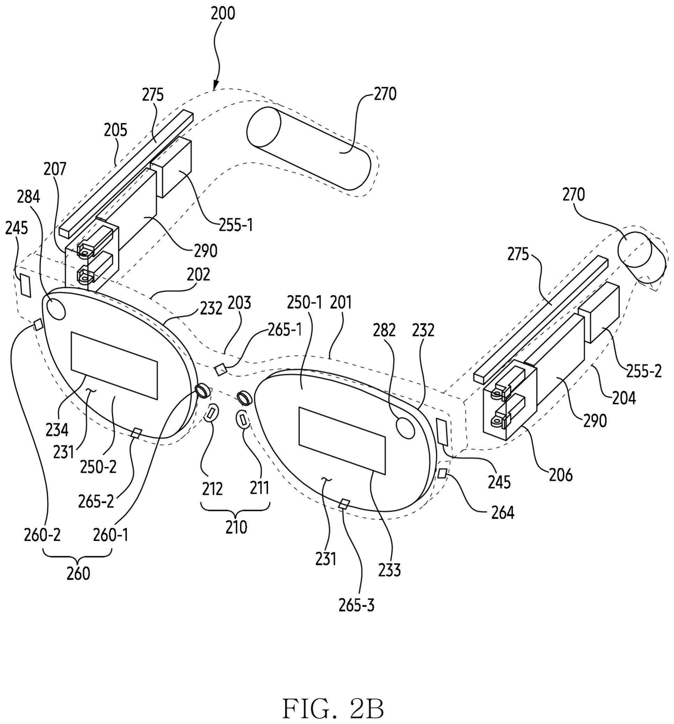

FIG. 2A illustrates an example of a perspective view of a wearable device in accordance with embodiments of the disclosure. FIG. 2B illustrates an example of one or more hardware in the wearable device in accordance with embodiments of the disclosure.

According to an embodiment, the wearable device 101 may have a form of glassed that may be wearable on a user's body part (e.g., head). The wearable device 101 of FIGS. 2A and 2B may be an example of the electronic device 101 of FIG. 1. The wearable device 101 may include a head mounted display (HMD). For example, a housing of the wearable device 101 may include a flexible material such as e.g., rubber and/or silicone that comes into close contact with a portion of the user's head (e.g., a portion of a user's face surrounding both eyes). For example, the housing of the wearable device 101 may include one or more straps that are able to be twined around the user's head, and/or one or more temples that are attachable to and detachable from the ears of the user's head.

Referring to FIG. 2A, the wearable device 101 according to an embodiment may include at least one display 250 and a frame 200 configured to support the at least one display 250.

According to an embodiment, the wearable device 101 may be worn on a part of the user's body. The wearable device 101 may provide augmented reality (AR), virtual reality (VR), or mixed reality (MR) obtained by mixing the augmented reality and the virtual reality to a user wearing the wearable device 101. For example, the wearable device 101 may display a virtual reality image provided by at least one optical device 282 or 284 of FIG. 2B on the at least one display 250, in response to a user's specified gesture obtained through motion recognition cameras (260-2, 264 of FIG. 2B). For example, the display 250 may include at least a portion of the display module 160 of FIG. 1.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the left eye and the right eye of the user, respectively.

Referring to FIG. 2B, the at least one display 250 may provide visual information transmitted from external light and other visual information distinct from the visual information, to the user through a lens included in the at least one display 250. The lens may be formed based on at least one of a Fresnel lens, a pancake lens, or a multi-channel lens. For example, the at least one display 250 may include a first surface 231 and a second surface 232 opposite to the first surface 231. A display area may be formed on the second surface 232 of the at least one display 250. When the user wears the wearable device 101, the external light may be incident on the first surface 231 and transmitted through the second surface 232 to be transmitted to the user. As another example, the at least one display 250 may display, on a display area formed on the second surface 232, an augmented reality image in which a virtual reality image provided from the at least one optical device (282, 284) is combined with a real-world screen transmitted through the external light.

In an embodiment, the at least one display 250 may include one or more waveguides (233, 234) that diffract light transmitted from the one or more optical devices (282, 284) to transmit the diffracted light to a user. At least one waveguide (233, 234) may be formed based on at least one of glass, plastic, or polymer. A nanopattern may be formed on an outside or at least a portion of an inside of the one or more waveguides (233, 234). The nanopattern may be formed based on a polygonal and/or curved-surfaced grating structure. Light incident on one end of the at least one waveguide (233, 234) may be propagated to the other end of the at least one waveguide (233, 234) by the nanopattern. The at least one waveguide (233, 234) may include at least one of at least one diffractive element (e.g., a diffractive optical element (DOE) or a holographic optical element (HOE)) or a reflective element (e.g., a reflective mirror). For example, the at least one waveguide (233, 234) may be disposed in the wearable device 101 to guide a screen displayed by the at least one display 250 to the eyes of the user. For example, the screen may be transmitted to the user's eyes, based on total internal reflection (TIR) generated in the at least one waveguide (233, 234).

The wearable device 101 may analyze an object included in a real-world image collected through a photographing camera 245 and combine a virtual object corresponding to an object to be provided with augmented reality among the analyzed objects, thereby displaying the combined virtual object on the at least one display 250. The virtual object may include at least one of a text and an image for various information related to the object included in the real-world image. The wearable device 101 may analyze the object based on a multi-camera such as e.g., a stereo camera. For analyzing the object, the wearable device 101 may execute a simultaneous localization and mapping (SLAM), using a multi-camera, an inertial measurement unit (IMU) (or an IMU sensor), and/or a time-of-flight (ToF). The user wearing the wearable device 101 may watch an image displayed on the at least one display 250.

According to an embodiment, the frame 200 may have a physical structure in which the wearable device 101 may be worn on the user's body. According to an embodiment, the frame 200 may be configured such that when the user wears the wearable device 101, the first display 250-1 and the second display 250-2 may be positioned corresponding to the user's left and right eyes, respectively. The frame 200 may support at least one display 250. For example, the frame 200 may support the first display 250-1 and the second display 250-2 to be positioned at positions corresponding to the left eye and the right eye of the user, respectively.

Referring to FIG. 2A, when the user wears the wearable device 101, the frame 200 may include an area 220 at least partially coming into contact with a part of the user's body. For example, the area 220 in contact with a part of the user's body of the frame 200 may include areas in contact with a portion of the user's nose, a portion of the user's ears, and a portion of a side surface of the user's face, which area are in contact with the wearable device 101. According to an embodiment, the frame 200 may include a nose pad 210 contacting a part of the user's body. When the wearable device 101 is worn by the user, the nose pad 210 may be in contact with a part of the user's nose. The frame 200 may include a first temple 204 and a second temple 205 that come into contact with another part of the user's body, which is distinguished from the part of the user's body.

For example, the frame 200 includes a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of an edge of the first rim 201 from one end of the bridge 203, a second pad 212 disposed along a portion of an edge of the second rim 202 from the other end of the bridge 203, a first temple 204 extending from the first rim 201 and fixed to a part of a wearer's ear, and a second temple 205 extending from the second rim 202 and fixed to a part of an ear opposite to the wear's ear. The first pad 211 and the second pad 212 may be in contact with a part of the user's nose, and the first temple 204 and the second temple 205 may be in contact with a part of the user's face and a part of the user's ear. The temples 204 and 205 may be rotatably connected to the rim by means of hinge units (206, 207) of FIG. 2B. The first temple 204 may be rotatably connected to the first rim 201 via the first hinge unit 206 disposed between the first rim 201 and the first temple 204. The second temple 205 may be rotatably connected to the second rim 202 via the second hinge unit 207 disposed between the second rim 202 and the second temple 205. According to an embodiment, the wearable device 101 may identify an external object (e.g., a user's fingertip) touching the frame 200 and/or a gesture performed by the external object, using a touch sensor, a grip sensor, and/or a proximity sensor formed on at least a portion of a surface of the frame 200.

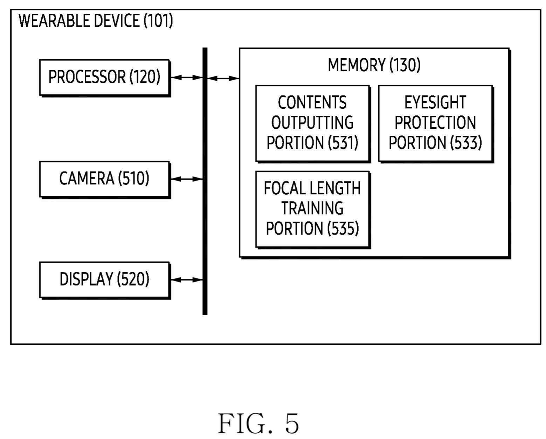

According to an embodiment, the wearable device 101 may include hardware (e.g., hardware to be described later referring to the block diagram of FIG. 5) that performs various functions. For example, the hardware may include a battery module 270, an antenna module 275, at least one optical device (282, 284), speakers (e.g., speakers 255-1 and 255-2), a microphone (e.g., microphones 265-1, 265-2 and 265-3), a light emitting module, and/or a printed circuit board (PCB) 290. Various hardware components may be disposed in the frame 200.

According to an embodiment, a microphone (e.g., the microphones 265-1, 265-2 and 265-3) of the wearable device 101 may be disposed on at least a part of the frame 200 to obtain a sound signal. Although a first microphone 265-1 disposed on the bridge 203, a second microphone 265-2 disposed on the second rim 202, and a third microphone 265-3 disposed on the first rim 201 are illustrated in FIG. 2B, the number and arrangement of the microphones 265 are not limited to the embodiment of FIG. 2B. When the number of microphones 265 included in the wearable device 101 is two or more, the wearable device 101 may identify a direction of the sound signal using a plurality of microphones disposed on different portions of the frame 200.

According to an embodiment, the at least one optical device (282, 284) may project a virtual object onto the at least one display 250 to provide a user with various image information. For example, the at least one optical device (282, 284) may be a projector. The at least one optical device (282, 284) may be disposed adjacent to the at least one display 250 or may be incorporated in the at least one display 250 as a part of the at least one display 250. According to an embodiment, the wearable device 101 may include a first optical device 282 corresponding to the first display 250-1 and a second optical device 284 corresponding to the second display 250-2. For example, the at least one optical device (282, 284) may include the first optical device 282 disposed at a periphery of the first display 250-1 and the second optical device 284 disposed at a periphery of the second display 250-2. The first optical device 282 may transmit light to a first waveguide 233 disposed on the first display 250-1, and the second optical device 284 may transmit light to a second waveguide 234 disposed on the second display 250-2.

In an embodiment, the camera 260 may include a photographing camera 245, an eye tracking camera (ET camera) 260-1, and/or a motion recognition camera 260-2. The photographing camera 245, the eye tracking camera 260-1, and the motion recognition cameras (260-2, 264) may be disposed at different positions on the frame 200 and may perform different functions. The eye tracking camera 260-1 may output data representing a gaze of a user wearing the wearable device 101. For example, the wearable device 101 may detect the gaze from an image including the user's pupil, which is obtained through the eye tracking camera 260-1. While an example of the eye tracking camera 260-1 being disposed toward the user's right eye is illustrated in FIG. 2B, the embodiment is not limited thereto, and the eye tracking camera 260-1 may be also disposed toward the user's left eye or toward both the eyes.

In an embodiment, the photographing camera 245 may photograph a real-world image or a background image to be combined with a virtual image to implement augmented reality or mixed reality contents. The photographing camera 245 may capture an image of a particular object present at a position viewed by the user and provide the image to the at least one display 250. The at least one display 250 may display one image in which information on the real-world image or the background image including the image of the particular object obtained using the photographing camera 245 is superimposed with a virtual image provided through the at least one optical device (282, 284). In an embodiment, the photographing camera 245 may be disposed on the bridge 203 disposed between the first rim 201 and the second rim 202.

Tracking the gaze of the user wearing the wearable device 101, the eye tracking camera 260-1 may match the gaze of the user with the visual information provided on the at least one display 250 to implement more realistic augmented reality. For example, when the user faces the front, the wearable device 101 may naturally display environment information related to the front of the user at a place where the user is located, on the at least one display 250. The eye tracking camera 260-1 may be configured to capture an image of the pupil of the user to determine the gaze of the user. For example, the eye tracking camera 260-1 may receive gaze detection light reflected from the user's pupil and track the user's gaze based on the position and movement of the received gaze detection light. In an embodiment, the eye tracking camera 260-1 may be disposed at positions corresponding to the left eye and the right eye of the user. For example, the eye tracking camera 260-1 may be disposed in the first rim 201 and/or the second rim 202 to face a direction in which a user wearing the wearable device 101 is located.

The motion recognition cameras (260-2, 264) may recognize a movement of the entire or a part of the user's body, such as the user's torso, hand, or face, to provide a specific event to a screen on the at least one display 250. The motion recognition cameras (260-2, 264) may make a gesture recognition of a motion of the user to obtain a signal corresponding to the motion, and may provide a display corresponding to the signal to the at least one display 250. The processor may identify a signal corresponding to the operation and perform a specified function based on the identification. In an embodiment, the motion recognition cameras (260-2, 264) may be disposed on the first rim 201 and/or the second rim 202.

The cameras 260 included in the wearable device 101 are not limited to the above-described eye tracking cameras 260-1 and motion recognition cameras (260-2, 264). For example, the wearable device 101 may use the camera 260 disposed toward a field of view (FoV) of the user to identify an external object included in the FoV. The identification of the external object by the wearable device 101 may be performed based on a sensor for identifying a distance between the wearable device 101 and the external object, such as e.g., a depth sensor and/or a time of flight (ToF) sensor. The camera 260 disposed toward the FoV may support an autofocusing function and/or an optical image stabilization (OIS) function. For example, the wearable device 101 may include the camera 260 (e.g., a face tracking (FT) camera) disposed toward the face in order to obtain an image including the face of the user wearing the wearable device 101.

Although not illustrated herein, the wearable device 101 according to an embodiment may further include a light source (e.g., LED) that emits light toward a subject (e.g., the user's eyes or face, and/or an external object in the FoV) captured using the camera 260. The light source may include an infrared wavelength of LEDs. The light source may be disposed in at least one of the frame 200 or the hinge units (206, 207).

According to an embodiment, the battery module 270 may supply power to various electronic components of the wearable device 101. In an embodiment, the battery module 270 may be disposed in the first temple 204 and/or the second temple 205. For example, the battery module 270 may include a plurality of battery modules 270. The plurality of battery modules 270 may be disposed in the first temple 204 and the second temple 205, respectively. In an embodiment, the battery module 270 may be disposed at an end of the first temple 204 and/or the second temple 205.

The antenna module 275 may transmit a signal or power to an outside of the wearable device 101, or may receive a signal or power from the outside. In an embodiment, the antenna module 275 may be disposed in the first temple 204 and/or the second temple 205. For example, the antenna module 275 may be disposed close to one side surface of the first temple 204 and/or the second temple 205.

A speaker 255 may output an acoustic signal to the outside of the wearable device 101. A sound output module may be referred to as a speaker. In an embodiment, the speaker 255 may be disposed in the first temple 204 and/or the second temple 205 in order to be placed adjacent to the ears of the user wearing the wearable device 101. For example, the speaker 255 may include a second speaker 255-2 disposed in the first temple 204 to be adjacent to the left ear of the user, and a first speaker 255-1 disposed in the second temple 205 to be adjacent to the right ear of the user.

The light emitting module may include at least one light emitting element. In order to visually provide the user with information on a specific state of the wearable device 101, the light emitting module may emit light of a color corresponding to the specific state or may emit light in a motion corresponding to the specific state. For example, when charging is required, the wearable device 101 may emit red light at regular intervals. In an embodiment, the light emitting module may be disposed on the first rim 201 and/or the second rim 202.

Referring to FIG. 2B, the wearable device 101 according to an embodiment may include a printed circuit board (PCB) 290. The PCB 290 may be included in at least one of the first temple 204 or the second temple 205. The PCB 290 may include an interposer disposed between at least two sub PCBs. One or more hardware components (e.g., hardware components illustrated by different blocks of FIG. 5) included in the wearable device 101 may be disposed on the PCB 290. The wearable device 101 may include a flexible PCB (FPCB) for connecting the hardware components with each other.

According to an embodiment, the wearable device 101 may include at least one of a gyro sensor, a gravity sensor, and/or an acceleration sensor, for detecting the posture of the wearable device 101 and/or the posture of the body part (e.g., head) of the user wearing the wearable device 101. The gravity sensor and the acceleration sensor may respectively measure a gravitational acceleration and/or an acceleration based on specified three-dimensional axes (e.g., x-axis, y-axis, and z-axis) perpendicular to each other. The gyro sensor may measure an angular velocity in each of the specified three-dimensional axes (e.g., the x-axis, the y-axis, and the z-axis). At least one of the gravity sensor, the acceleration sensor, and the gyro sensor may be referred to as an inertial measurement unit (IMU). According to an embodiment, the wearable device 101 may identify a user's performed motion and/or gesture to execute or cease a specific function of the wearable device 101 based on the IMU.

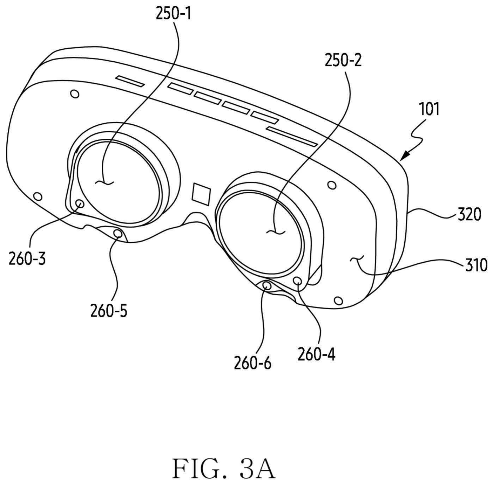

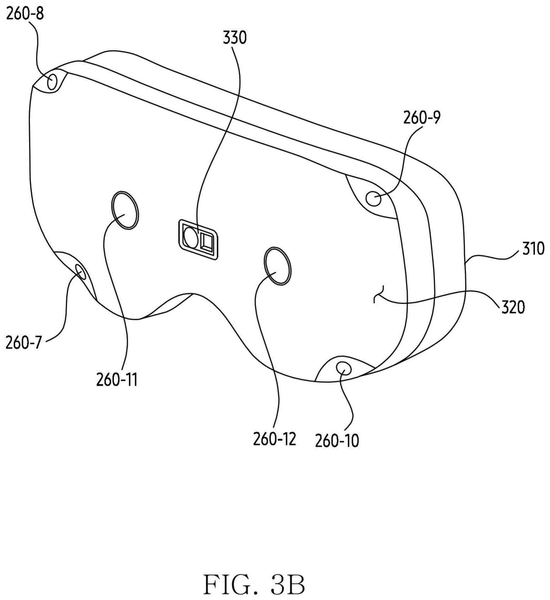

FIGS. 3A and 3B illustrate examples of an appearance of a wearable device in accordance with embodiments of the disclosure.

The wearable device 101 of FIGS. 3A and 3B may be an example of the electronic device 101 of FIG. 1. An example of an exterior of a first surface 310 of the housing of the wearable device 101 according to an embodiment is illustrated in FIG. 3A, and an example of an exterior of a second surface 320 opposite to the first surface 310 is illustrated in FIG. 3B.

Referring to FIG. 3A, the first surface 310 of the wearable device 101 according to an embodiment may have the shape attachable on a user's body part (e.g., the user's face). In an embodiment, the wearable device 101 may further include a strap for fixing on the user's body part and/or one or more temples (e.g., the first temple 204 and/or the second temple 205 of FIGS. 2A and 2B). A first display 250-1 for outputting an image to the left eye of both eyes of the user and a second display 250-2 for outputting an image to the right eye of the both eyes of the user may be disposed on the first surface 310. The wearable device 101 may further include rubber or silicon packing formed on the first surface 310, in order to prevent interference by light (e.g., ambient light) different from light emitted from the first display 250-1 and the second display 250-2.

According to an embodiment, the wearable device 101 may include cameras (260-3, 260-4) for capturing and/or tracking both the user's eyes adjacent to the first display 250-1 and the second display 250-2 respectively. For example, the cameras (260-3, 260-4) may be referred to as an ET camera. According to an embodiment, the wearable device 101 may include cameras (260-5, 260-6) for capturing and/or recognizing the user's face. The cameras (260-5, 260-6) may be referred to as an FT camera.

Referring to FIG. 3B, a camera (e.g., cameras (260-7, 260-8, 260-9, 260-10, 260-11, 260-12)) and/or a sensor (e.g., a depth sensor 330) for obtaining information related to an external environment of the wearable device 101 may be disposed on the second surface 320 opposite to the first surface 310 of FIG. 3A. For example, the cameras (260-7, 260-8, 260-9, 260-10) may be disposed on the second surface 320 to recognize an external object. For example, using the cameras (260-11, 260-12), the wearable device 101 may obtain an image and/or a video to be transmitted to each of both eyes of the user. The camera 260-11 may be disposed on the second surface 320 of the wearable device 101 to obtain an image to be displayed via the second display 250-2, corresponding to the right eye among the both eyes. The camera 260-12 may be disposed on the second surface 320 of the wearable device 101 to obtain an image to be displayed via the first display 250-1, corresponding to the left eye among the both eyes.

According to an embodiment, the wearable device 101 may include a depth sensor 330 disposed on the second surface 320 to identify a distance between the wearable device 101 and an external object. Using the depth sensor 330, the wearable device 101 may obtain spatial information (e.g., a depth map) about at least a portion of the FoV of the user wearing the wearable device 101.

Although not illustrated herein, a microphone for obtaining a sound output from the external object may be disposed on the second surface 320 of the wearable device 101. The number of microphones may be one or more depending upon an embodiment.

As described above, the wearable device 101 according to an embodiment may include hardware (e.g., the cameras (260-7, 206-8, 260-9, 260-10) and/or the depth sensor 330) for identifying a body part including a user's hand. The wearable device 101 may identify a gesture indicated by a motion of the body part. The wearable device 101 may provide a UI based on the identified gesture to a user wearing the wearable device 101. The UI may support a function for editing an image and/or a video stored in the wearable device 101. The wearable device 101 may communicate with an external electronic device different from the wearable device 101 to identify the gesture more accurately.

The wearable device 101 of FIGS. 2A to 3B (or the electronic device 101 of FIG. 1) may provide a virtual environment. For example, the virtual environment may represent an example of extended reality (XR) provided through the wearable device 101. For example, the XR may include augmented reality (AR), virtual reality (VR), and mixed reality (MR). For example, the wearable device 101 for AR may provide augmented information based on a real-world object. For example, the wearable device 101 may include AR glasses or VR glasses for providing information to the user based on a real-world object. For example, the wearable device 101 may include a video see-through (VST) device.

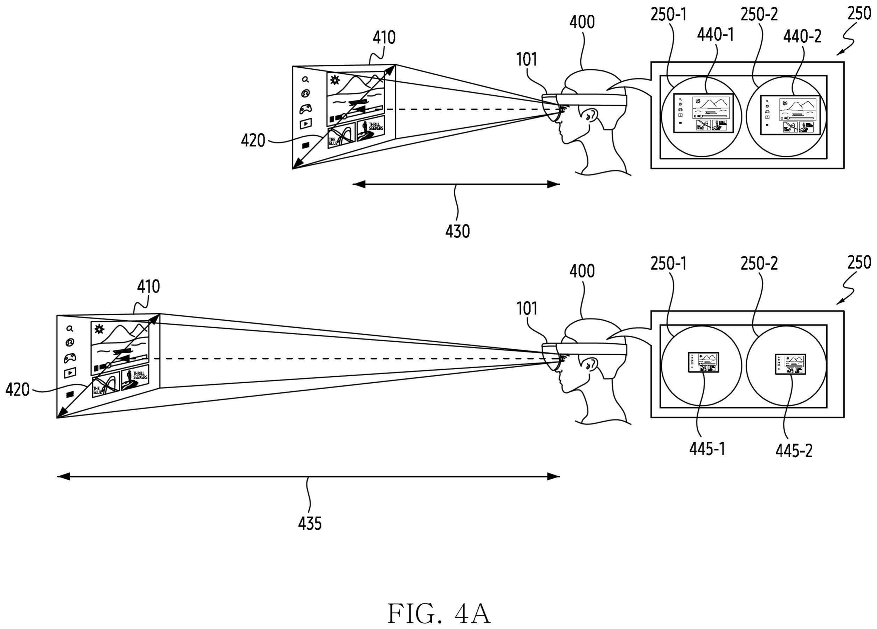

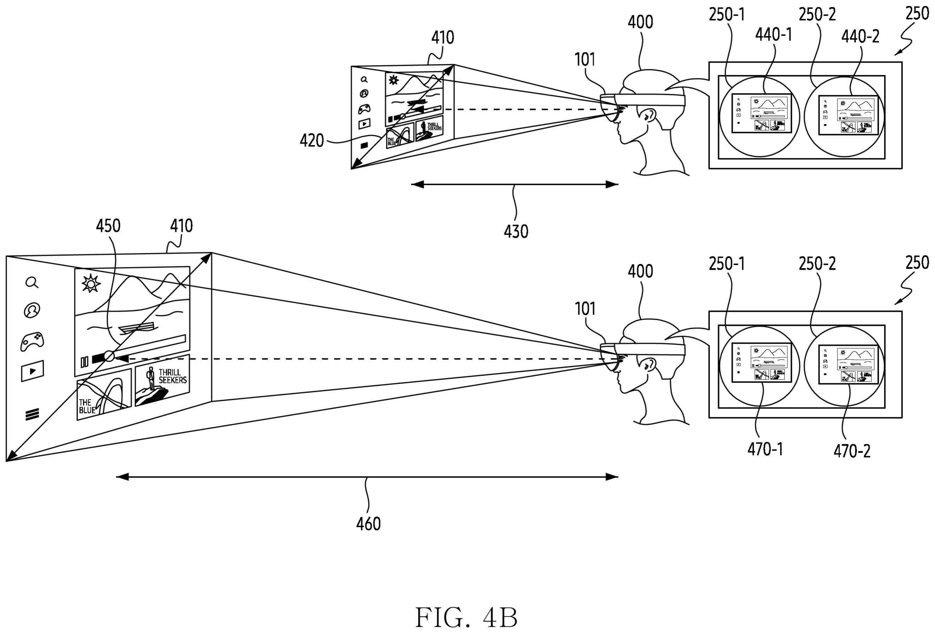

The virtual environment provided by the wearable device 101 may include virtual objects having different depths. The virtual objects may be referred to as contents. For example, when a user wearing the wearable device 101 looks at the contents, its focal length may be changed depending on the content. The focal length may indicate a focal length of the wearable device 101 with respect to the user's eye. For example, a position of the content with respect to the eye is generally not changed while the user is watching the content, and thus the focal length may be fixed to a specific distance. Accordingly, the user's eyesight may deteriorate. In contrast, when a user uses the virtual environment including virtual objects having different depths, various focal lengths according to the virtual objects may be used, and thus the user's eyesight may be improved. However, even in a virtual space, when any fixed content is used, there may still be a problem that the focal length is fixed to a specific distance. Hereinafter, it will be described an apparatus and a method for using various focal lengths for a specific content in the case of using a content in the virtual environment. Referring to FIGS. 4A and 4B, it will be described a method of displaying a content in the virtual environment according to a user's dynamic focal length.

FIG. 4A illustrates an example method of displaying a content based on a focal length in a virtual environment. FIG. 4B illustrates an example method of displaying a content based on a focal length in a virtual environment, in accordance with embodiments of the disclosure.

The method of FIGS. 4A and 4B may be performed by the wearable device 101 of FIGS. 2A to 3B (or the electronic device of FIG. 1).

Referring to FIGS. 4A and 4B, the user 400 may wear the wearable device 101. For example, the wearable device 101 may include an HMD. For example, the HMD may be worn on the head of the user 400. FIGS. 4A and 4B illustrate an HMD including two displays 250-1 and 250-2 as an example of the wearable device 101, but embodiments of the disclosure are not limited thereto. For example, the wearable device 101 may include one display or three displays. Further, for example, the wearable device 101 may include a lens having a fixed focal length. When a plurality of displays including a lens having a fixed focal length are used, the wearable device 101 may adjust the focal length using the plurality of displays. Alternatively, for example, the wearable device 101 may include a lens having a variable focal length. When using a display including a lens having a variable focal length, the wearable device 101 may adjust the focal length by adjusting the lens having the variable focal length in the display. Referring to FIGS. 4A and 4B, the wearable device 101 may provide a virtual environment. For example, the virtual environment may include a content 410. For example, the content 410 may be referred to as a virtual object or a visual object displayed in the virtual environment. FIGS. 4A and 4B illustrate the content 410 as a two-dimensional (2D) object, but embodiments of the disclosure are not limited thereto. For example, an embodiment of the disclosure may include the content 410 that is a three-dimensional (3D) object. In the above-described example, the wearable device 101 may represent a depth based upon a position of the virtual object in the virtual environment, via at least one display having a lens having a fixed focal length or a lens having a variable focal length.

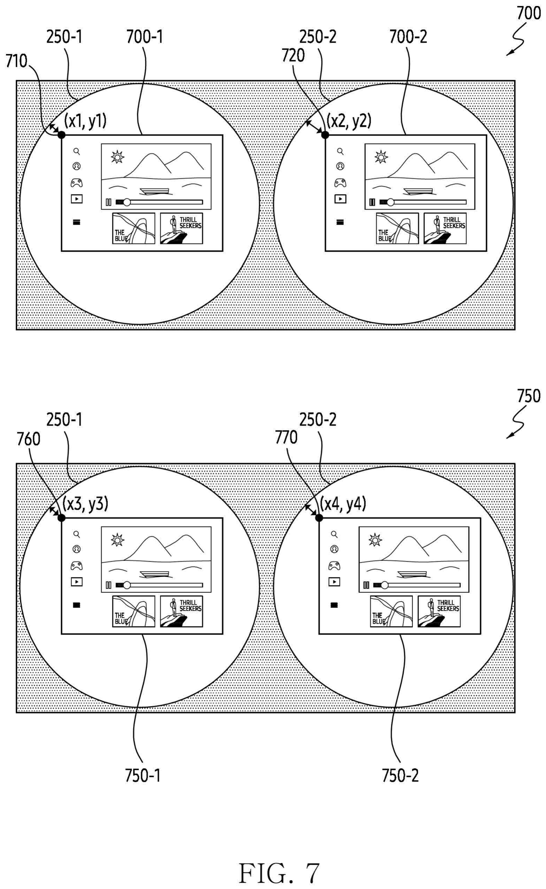

Referring to FIGS. 4A and 4B, while using the virtual environment with the wearable device 101, the wearable device 101 may display the content 410 having a designated size on a designated position in the virtual environment. For example, the wearable device 101 may display the content 410 having a first size 420 in a first area of the virtual environment. For example, the first area (or a first depth in the virtual environment) may indicate a position in the virtual environment where the focal length is a first distance 430. The wearable device 101 may display the content 410 having the first size 420 in the first area via the at least one display 250. For example, in order to display the content 410 having the first size 420 in the first area, the wearable device 101 may display a first image 440-1 through at least a portion of an active area of the first display 250-1. Further, for example, in order to display the content 410 having the first size 420 in the first area, the wearable device 101 may display a second image 440-2 through at least a portion of an active area of the second display 250-2. The areas of the regions that the first image 440-1 and the second image 440-2 respectively occupy of the active area, for displaying the content 410 having the first size 420 in the first area, may be substantially the same as each other. However, the positions of the first image 440-1 and the second image 440-2 in the second area may be different from each other. Hereinafter, specific details related thereto will be described with reference to FIG. 7.

In FIG. 4A, the wearable device 103 may display the content 410 having the first size 420 in the second area that is different from the first area, through the at least one display 250. For example, the second area (or the second depth in the virtual environment) may indicate a position in the virtual environment where the focal length is a second distance 435. The wearable device 101 may display the content 410 having the first size 420 in the second area through the at least one display 250. For example, in order to display the content 410 having the first size 420 in the second area, the wearable device 101 may display an image 445-1 through at least a portion of the active area of the first display 250-1. Further, for example, in order to display the content 410 having the first size 420 in the second area, the wearable device 101 may display an image 445-2 through at least a portion of the active area of the second display 250-2. As the distance changes from the first distance 430 to the second distance 435, the size occupied by the image 445-1 or the image 445-2 in the second area may be changed. For example, the display size of the image 445-1 may be smaller than the display size of the first image 440-1. Alternatively, for example, the display size of the image 445-2 may be smaller than the display size of the second image 440-2. As the depth is changed from the first distance 430 to the deeper second distance 435, the wearable device 101 may change the size occupied by the image (445-1, 445-2) in the second area to show perspective.

In contrast, according to some embodiments of the disclosure, FIG. 4B illustrates an example of changing the area (or depth) in which the content 410 is displayed based on a time duration of displaying the content 410 and changing the size of the content 410 in the virtual environment based on the changed area (or depth), in order to protect eyesight of the user 400, in accordance with embodiments of the present disclosure. In this case, even if the size in the virtual environment is changed, the size of the image for displaying the content 410 on the at least one display 250 may remain substantially the same.

Referring to FIG. 4B, while the user 400 watches the content 410 with the wearable device 101, the wearable device 101 may change the size and the position of the content 410. For example, the wearable device 101 may change the position of the content 410 in the virtual environment from the first area to the second area. For example, the second area may indicate a position (in the virtual environment) in which the focal length is a second distance 460. The second distance 460 may be greater than the first distance 430. Further, the wearable device 101 may enlarge the size of the content 410 from the first size 420 to the second size 450. In other words, when displaying the content 410 having the changed focal length, the wearable device 101 may display the content 410 having the changed size. In this case, the wearable device 101 may display the content 410 having the second size 450 in the second area through the at least one display 250. For example, in order to display the content 410 having the second size 450 in the second area, the wearable device 101 may display a third image 470-1 through at least a portion of the active area of the first display 250-1. Further, for example, in order to display the content 410 having the second size 450 in the second area, the wearable device 101 may display a fourth image 470-2 through at least a portion of the active area of the second display 250-2. In order to display the content 410 having the second size 450 in the second area, the areas of the regions respectively occupied by the third image 470-1 and the fourth image 470-2 in the active area may be substantially the same. However, the positions of each of the third image 470-1 and the fourth image 470-2 in the active display area may be different from each other. In this case, the difference between the first image 440-1 of the first display 250-1 and the second image 440-2 of the second display 250-2 may be greater than the difference between the third image 470-1 of the first display 250-1 and the fourth image 470-2 of the second display 250-2. For example, the difference may indicate a difference between coordinates of a designated position of each of these images (e.g., the first image 440-1 and the second image 440-2, or the third image 470-1 and the fourth image 470-2). Specific details related thereto will be described with reference to FIG. 7 below.

Referring to FIG. 4B, the wearable device 101 may change the position and the size of displaying the content 410 to change the focal length. For example, the wearable device 101 may change the position and the size of displaying the content 410 in order to change the focal length within a specified range. For example, the specified range may be identified based on capability information for adjusting the focal length of the user 400. For example, the capability information may include at least one of a minimum length and a maximum length for the focal length of the user 400, or a focal length preferred by the user 400. The maximum distance may be referred to as a 'limit distance' for the focal length of the user 400. For example, when the minimum distance in the specified range is the first distance 430 and the maximum distance is the second distance 460, the wearable device 101 may display the content 410 having a size in between the first size 420 and the second size 450. In this case, the content 410 having the size in between the first size 420 and the second size 450 may be displayed at a position in the virtual environment between the first area and the second area. For example, the size of the content 410 may be identified based on the position in the virtual environment. For example, the size may be linearly proportional to a distance from a reference position corresponding to the user 400 in the virtual environment to the position of the content 410 in the virtual environment. For example, the distance may substantially correspond to the focal length. In the example of FIG. 4B, when the focal length is changed to move away from the first distance 430 to the second distance 460, the wearable device 101 may gradually expand the size of the content 410 from the first size 420 to the second size 450. Conversely, when the focal length is changed to get closer from the second distance 460 to the first distance 430, the wearable device 101 may gradually reduce the size of the content 410 from the second size 450 to the first size 420. Referring to the above description, the wearable device 101 may expand and reduce the position and the size at which the content 410 is displayed, in order to prevent the focal length of the user 400 from being fixed.

As described above, while changing the position and the size at which the content 410 is displayed, the content 410 recognized by the user 400 may remain substantially the same. For example, the range within the active display area (or display) occupied by each of the first image 440-1 and the second image 440-2 indicating the content 410 having the first size 420 within the first area may be substantially the same as the range within the active display area (or display) occupied by each of the third image 470-1 and the fourth image 470-2 indicating the content 410 having the second size 450 within the second area. Accordingly, while the position and the size of the content 410 are changed within the specified range, the user 400 may not recognize the change in the focal length for watching the content 410. In other words, the user 400 may recognize that the position or the size of the content 410 being watched remains unchanged.

FIG. 4B illustrates the wearable device 101 representing the content 410 with different depths, using binocular parallax (e.g., the first image 440-1 or the third image 470-1 of the first display 250-1 and the second image 440-2 or the fourth image 470-2 of the second display 250-2), but embodiments of the disclosure are not limited thereto. For example, the wearable device 101 including the varifocal lens may display the content 410 with different depths (or focal lengths) even without using such binocular parallax. In the case of the wearable device 101 including the varifocal lens, even if the content 410 is displayed via a single display, the content 410 with a different depth may be represented.

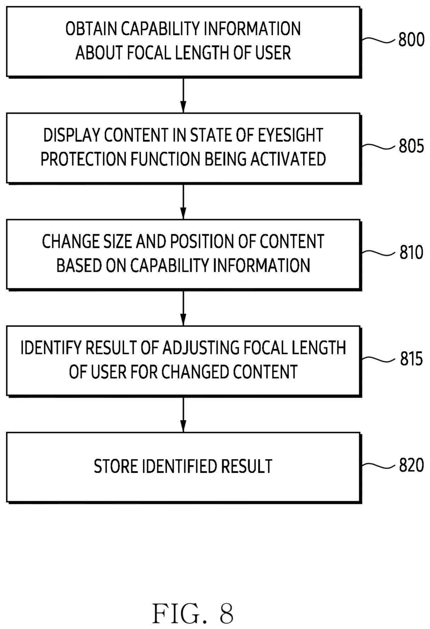

An apparatus and a method according to an embodiment of the disclosure may display the content 410 using a variable focal length while maintaining the user's viewing experience using the content 410 of the user 400. Accordingly, while the user 400 watches the content 410, it may be possible to prevent the ability to adjust the focal length from deteriorating. Further, the apparatus and method according to the embodiment of the disclosure may provide a user experience such as viewing substantially the same content, even when the focal length is changed. Furthermore, the apparatus and method according to the embodiment of the disclosure may perform training for protecting the eyesight of the user 400 without consuming additional resources. Specific details related to the above training will be described with reference to FIG. 8 below.

FIG. 5 illustrates an example block diagram of a wearable device in accordance with embodiments of the disclosure.

The wearable device 101 of FIG. 5 may be an example of the electronic device 101 of FIG. 1 and the wearable device 101 of FIGS. 2A to 3B.

Referring to FIG. 5, the wearable device 101 according to an embodiment may include at least one of a processor 120, a memory 130, a camera 510, or a display 520. The processor 120, the memory 130, the camera 510, and the display 520 may be electrically and/or operably coupled with each other by a communication bus. Hereinafter, when the hardware components are operatively coupled, it may mean that either a direct connection or an indirect connection between the hardware components is established by wire or wirelessly such that a second hardware component among the hardware components may be controlled by a first hardware component. Although it is illustrated based on different blocks, the embodiments are not limited thereto, and a portion (e.g., at least a portion of the processor 120 and the memory 130) of the hardware components illustrated in FIG. 5 may be incorporated in a single integrated circuit such as e.g., a system on chip (SoC). The type and/or number of hardware components included in the wearable device 101 are not limited to those illustrated in FIG. 5. For example, the wearable device 101 may include only some of the hardware components illustrated in FIG. 5.

For example, the wearable device 101 may be connected to an external electronic device based on a wired network and/or a wireless network. For example, the wired network may include a network such as Internet, local area network (LAN), wide area network (WAN), or a combination thereof. For example, the wireless network may include a network such as long term evolution (LTE), 5G new radio (NR), wireless fidelity (Wi-Fi), Zigbee, near field communication (NFC), Bluetooth, Bluetooth low-energy (BLE), or a combination thereof. The wearable device 101 may be directly connected to the external electronic device or may be indirectly connected thereto via one or more routers and/or access points (APs).

The processor 120 of the wearable device 101 according to an embodiment may include a hardware component for processing data based on one or more instructions. The hardware component for processing data may include, for example, an arithmetic and logic unit (ALU), a floating point unit (FPU), and/or a field programmable gate array (FPGA). For example, the hardware component for processing data may include a central processing unit (CPU), a graphics processing unit (GPU), a digital signal processing (DSP), and/or a neural processing unit (NPU). The number of processors 120 may be one or more. For example, the processor 120 may have a structure of a multi-core processor such as a dual-core, a quad-core, or a hexa-core. The processor 120 of FIG. 5 may include at least a portion of the processor 120 of FIG. 1.

According to an embodiment, the memory 130 of the wearable device 101 may include a hardware component for storing data and/or instructions input to or output from the processor 120. The memory 130 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a cache RAM, or a pseudo SRAM (PSRAM). The nonvolatile memory may include, for example, at least one of a programmable ROM (PROM), an erasable PROM (EPROM), an electrically erasable PROM (EEPROM), a flash memory, a hard disk, a compact disk, and an embedded multimedia card (eMMC). The memory 130 of FIG. 5 may include at least a portion of the memory 130 of FIG. 1.

According to an embodiment, the camera 510 of the wearable device 101 may include at least one optical sensor (e.g., a charged coupled device (CCD) sensor or a complementary metal oxide semiconductor (CMOS) sensor) to generate an electrical signal indicating a color and/or brightness of light. A plurality of optical sensors included in the camera 510 may be disposed in the form of a two-dimensional array. The camera 510 may obtain an electrical signal of each of the plurality of optical sensors substantially simultaneously to generate an image corresponding to light reaching the optical sensors of a two-dimensional grid and including a plurality of pixels arranged in two dimensions. For example, the photographic data captured using the camera 510 may refer to an image obtained from the camera 510. For example, video data captured using the camera 510 may refer to a sequence of a plurality of images obtained from the camera 510 at a specified frame rate. The wearable device 101 according to an embodiment may be disposed to face a direction in which the camera 510 receives light, and may further include a flashlight for emitting light in the direction. The number of cameras 510 included in the wearable device 101 may be one or more, as described above with reference to FIGS. 2A and 2B and/or FIGS. 3A and 3B.

According to an embodiment, the display 520 of the wearable device 101 may output visualized information (e.g., the images of FIG. 4B or the images of FIG. 7) to the user. The number of displays 520 included in the wearable device 101 may be one or more. For example, the display 520 may be controlled by the processor 120 and/or a graphic processing unit (GPU) to output visualized information to the user. The display 520 may include a flat panel display (FPD) and/or electronic paper. The FPD may include a liquid crystal display (LCD), a plasma display panel (PDP), a digital mirror device (DMD), one or more light emitting diodes (LEDs), and/or a micro LED. The LED may include an organic LED (OLED). The display 520 of FIG. 5 may include at least a portion of the display module 160 of FIG. 1. The display 520 of FIG. 5 may illustrate an example of at least one display 250 of FIG. 2A.

In an embodiment, light transmission made be generated in at least a portion of the display 520. The wearable device 101 may provide a user with a user experience associated with augmented reality by providing a combination of light output through the display 520 and light transmitted through the display 520. Referring to FIGS. 2A and 2B, and/or FIGS. 3A and 3B, the display 520 of the wearable device 101 according to an embodiment may have a structure for covering the entire field-of-view (FOV) of the user or emitting light toward the FoV, while the user is wearing it on a body part of the user, such as a head. In an embodiment, the wearable device 101 may include another output means for outputting information in a form other than a visual form or an auditory form. For example, the wearable device 101 may include at least one speaker for outputting an audio signal and/or a motor (or actuator) for providing haptic feedback based on vibrations.

According to an embodiment, a communication circuit of the wearable device 101 may include hardware for supporting transmission and/or reception of electrical signals between the wearable device 101 and an external electronic device. The communication circuit may include, for example, at least one of a modem, an antenna, or an optic/electronic (O/E) converter. The communication circuit may support transmission and/or reception of electrical signals, based on various types of communication means such as e.g., Ethernet, Bluetooth, Bluetooth low energy (BLE), ZigBee, long term evolution (LTE), 5G new radio (NR) or the like. The communication circuit of FIG. 5 may include at least a portion of the communication module 190 and/or the antenna module 197 of FIG. 1.

In an embodiment, the wearable device 101 may include an output means for outputting information in a form other than the visualized form. For example, the wearable device 101 may include a speaker for outputting an acoustic signal. For example, the wearable device 101 may include a motor for providing haptic feedback based on vibrations.

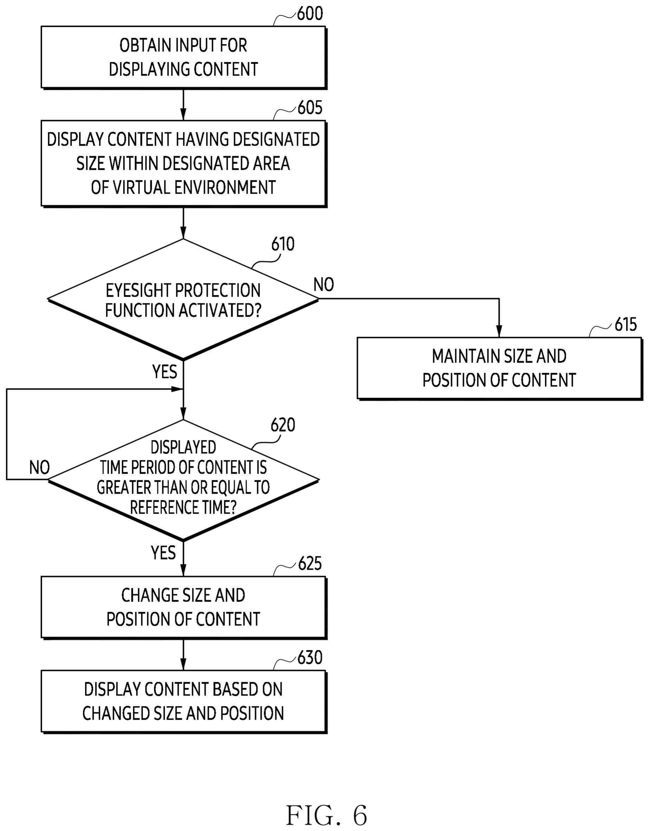

Referring to FIG. 5, according to an embodiment, one or more instructions (or commands) indicating an arithmetic operation and/or an operation to be performed on data by the processor 120 of the wearable device 101 may be stored in the memory 130 of the wearable device 101. A set of one or more instructions may be referred to as a program, firmware, an operating system, a process, a routine, a sub-routine, and/or an application. Hereinafter, when an application is installed in an electronic device (e.g., the wearable device 101), it may mean that one or more instructions provided in the form of an application are stored in memory 130, such that the one or more applications are stored in a format that is executable by a processor of the electronic device (e.g., a file with an extension specified by the operating system of the wearable device 101). According to an embodiment, the wearable device 101 may perform the operations of FIGS. 6, 8, 9, and 10 by executing the one or more instructions stored in the memory 130.

Referring to FIG. 5, the one or more instructions included in the memory 130 may be divided into a contents outputting portion 531, an eyesight protection portion 533, and/or a focal length training portion 535. For example, each of the contents outputting portion 531, the eyesight protection portion 533, and the focal length training portion 535 may be implemented as a program or software.

For example, the wearable device 101 may display at least one content in the virtual environment using the contents outputting portion 531. For example, the wearable device 101 may use the contents outputting portion 531 to render the content, based on rendering information about the contents in the virtual environment. For example, the rendering information may include at least one of z-index, brightness, transparency, pixel, or color for the content. The wearable device 101 may use the contents outputting portion 531 to display, via the display 520, an image in which the content is rendered.

For example, the wearable device 101 may use the eyesight protection portion 533 to change the position and the size of the content in the virtual environment. For example, the wearable device 101 may use the eyesight protection portion 533 to adjust a focal length of a user (e.g., the user 400 of FIGS. 4A and 4B). For example, in order to adjust the focal length, the wearable device 101 may change the position and the size of the content. For example, the size of the content may be identified based on a position of the content. For example, the size may be proportional to a difference between a reference position corresponding to the user in the virtual environment and the position of the content. For example, the reference position may indicate a virtual position in the virtual environment where the user's gaze starts. The difference between the reference position and the position of the content may correspond to the focal length. In other words, as the focal length increases, the position of the content may be moved away from the reference position, and therefore, the size of the content may be enlarged. Conversely, as the focal length decreases, the position of the content may get closer to the reference position. Accordingly, the size of the content may be reduced. The range in which the focal length is adjusted may be identified based on at least one of capability information of adjusting the focal length by the user or a characteristic of the content. For example, the capability information may include at least one of a reaction speed related to adjustment of the focal length of the user, a minimum length and a maximum length for the focal length of the user, or a focal length preferred by the user. For example, the characteristic of the content may include at least one of a play speed of the content or a type of the content. The type of content may include a static type such as a text or a picture or a dynamic type such as a video.

For example, the wearable device 101 may use the contents outputting portion 531 to output substantially the same image, while changing the position and the size of the content based on the eyesight protection portion 533. Referring to FIG. 4B, the area occupied within the active display area of the display 520 by each of the first image 440-1 and the second image 440-2 representing the content 410 having the first size 420 in the first area may be substantially the same as the area occupied within the active display area of the display 520 by each of the third image 470-1 and the fourth image 470-2 representing the content 410 having the second size 450 in the second area. In other words, the resolution of the display 520 for the first image 440-1 and the second image 440-2 may correspond to the resolution of the display 520 for the third image 470-1 and the fourth image 470-2. Details related thereto will be described with reference to FIG. 7 below.

For example, the wearable device 101 may use the focal length training portion 535 to perform training on the focal length of the user. For example, the wearable device 101 may use the focal length training portion 535 to identify capability information about the focal length of the user. For example, the capability information may be identified through eye-calibration of the user. For example, the eye calibration may be performed, when the user initially wears the wearable device 101 or based on an input by the user. For example, the wearable device 101 may use the focal length training portion 535 to adjust the focal length of the user, based on the identified capability information. For example, the wearable device 101 may change the position and the size of the content in the virtual environment, based on the capability information. For example, the wearable device 101 may identify a range in which the position and the size of the content are to be changed, based on the capability information. For example, while the position and the size of the content are changed within the range according to the adjustment of the focal length, the wearable device 101 may use the focal length training portion 535 to identify a result of the adjustment of the focal length. For example, the wearable device 101 may identify the actual focal length of the user. For example, the wearable device 101 may identify the actual focal length, by tracking the user's gaze using the camera 510. For example, the wearable device 101 may identify a difference between the actual focal length and the focal length identified (or calculated) based on the capability information. The difference between the actual focal length and the identified focal length may be included in the result. The wearable device 101 may store the result in the memory 130. For example, the wearable device 101 may perform an adjustment of the focal length based on the stored result, to achieve the adjustment optimized for the user. Further, the wearable device 101 may perform training on the adjusting capability of the focal length, by adjusting a position of the content in the virtual environment to correspond to a focal length beyond the user's limit focal length identified based on the capability information. The limit focal length may be included in the range in which the location and size of the content are to be changed. The focal length going out of the limit focal length may be referred to as a training range. For example, the wearable device 101 may adjust the focal length for the training range identified based on the result, using the eyesight protection portion 533. Details related thereto will be described with reference to FIG. 8 below.

FIG. 6 illustrates an example of a method of displaying content based on a focal length in a virtual environment, in accordance with embodiments of the disclosure.

At least a part of the method of FIG. 6 may be performed by the wearable device 101 of FIG. 5. For example, at least a part of the method may be controlled by the processor 120 of the wearable device 101.

Referring to FIG. 6, in operation 600, the wearable device 101 may obtain an input for displaying a content. In FIG. 6, the content which is one object is described as an example, however, embodiments of the disclosure are not limited thereto. For example, the wearable device 101 may obtain an input for displaying a plurality of contents. According to an embodiment, the wearable device 101 may display a virtual environment. For example, the wearable device 101 may display the virtual environment in response to execution of a software application for providing the virtual environment. For example, the software application may represent an example of one service that provides the virtual environment. For example, in the state that the software application is being executed, the wearable device 101 may obtain an input for displaying the content. For example, the input may include a user input of a user wearing the wearable device 101.

In operation 605, the wearable device 101 may display a content having a designated size within a designated area of the virtual environment. According to an embodiment, the wearable device 101 may display the content having the designated size within the designated area, based on the input. For example, the designated area may be referred to as an 'initial area' in which the content is to be displayed, which area is set by the user. For example, the designated size may be referred to as an 'initial size' in which the content is displayed, which size is set by the user. For example, the designated size (or the initial size) may indicate an area of the content with respect to a direction in which the user views the content. Hereinafter, the designated area may be referred to as a 'first area,' and the designated size may be referred to as a 'first size.' For example, the wearable device 101 may display the content having the first size within the first area of the virtual environment. For example, the first area may indicate a position in the virtual environment in which a focal length of the user is a first distance. According to an embodiment, the wearable device 101 may render an image (or images) for displaying the content, based on the designated size and the designated position. As the rendered image is displayed through the display area of the display 520, the content having the first size may be displayed in the first area.

According to an embodiment, the content having the first size in the first area may be displayed through at least a part of the display area of the display 520 of the wearable device 101. For example, the display area may represent an entire area in which an image may be displayed through the display 520. For example, the at least the part of the display area may represent a part or all of an active display area for displaying the content having the first size in the first area of the display area. When the display 520 includes a plurality of displays (e.g., the first display 250-1 and the second display 250-2 of FIG. 2) (or display areas), the wearable device 101 may display a first image through at least a portion of the first display area of the first display 250-1 and a second image through at least a portion of the second display area of the second display 250-2. The first image and the second image may represent images for displaying the content having the first size in the first area. For example, the first display area may be positioned with respect to (facing) the user's left eye. For example, the second display area may be positioned with respect to (facing) the user's right eye. Such positioning with respect to the left eye or the right eye may indicate that it is located in an area visible through the left eye or the right eye of the user. In the above-described example, while an example of the wearable device 101 using a method of representing the content and the depth thereof using binocular parallax is described, the embodiments of the disclosure are not limited thereto. For example, the wearable device 101 with a varifocal lens may display a content having different depths (or focal lengths) using the varifocal lens inside the display 520, even without using binocular parallax.

In operation 610, optionally, the wearable device 101 may identify whether an eyesight protection function is activated. The eyesight protection function may represent a function of changing a position and a size of the content in the virtual environment to protect the user's eyesight. In this case, as the position and the size of the content are changed, a focal length may be changed while the user is watching the content. Further, while the user watches the content, as the size changes based on the position of the content, an externally displayed size of the content as recognized by the user may be maintained constant. The externally displayed size may be identified based on a ratio (or a resolution) of an area (e.g., at least a part thereof) for the content to the display area of the display 520. In other words, even if the position and the size of the content in the virtual environment are changed, the externally displayed size of the content may be maintained to be substantially constant. Accordingly, while the user's viewing experience remains substantially constant when the user is watching the content, the focal length of the user may be dynamically changed. Hence, the user's eyesight may be protected, depending upon to the dynamic focal length.

According to an embodiment, the wearable device 101 may identify whether the eyesight protection function is activated in the software application providing the virtual environment. According to an embodiment, the wearable device 101 may identify whether the eyesight protection function is activated in a setting of the wearable device 101. In other words, the eyesight protection function may be applied to each software application or to all software applications. Further, for example, the eyesight protection function may be set for each content.

In operation 610, when the eyesight protection function has been activated, the wearable device 101 may perform operation 620. In contrast, in the operation 610, when the eyesight protection function is deactivated, the wearable device 101 may perform operation 615.

In operation 615, the wearable device 101 may maintain the size and the position of the content. For example, the wearable device 101 may maintain the size of the content in the first size and the position in the first area. For example, in response to identifying that the eyesight protection function is deactivated, the wearable device 101 may maintain the state of displaying the content having the first size in the first area.

In operation 620, the wearable device 101 may identify whether a time (or a time period) for which the content is displayed is greater than or equal to a reference time. According to an embodiment, in response to (based on) identifying that the eyesight protection function is activated, the wearable device 101 may identify whether the time period for which the content is displayed is greater than or equal to the reference time.

According to an embodiment, the reference time may be identified based on at least one of capability information of adjusting a focal length of the user or a characteristic of the content. The capability information may include at least one of a reaction speed related to adjustment of the focal length of the user, a minimum length and a maximum length for the focal length of the user, or a focal length preferred by the user. For example, the characteristic of the content may include at least one of a play speed of the content or a type of the content. The type of content may include a static type such as a text or a picture or a dynamic type such as a video. For example, the reference time may be set longer for a person with a slower reaction speed (e.g., an elderly person) than for a person with a faster reaction speed (e.g., a young person). Alternatively, the reference time may be set longer when the content is dynamic (or with fast playing speed) than when the content is static (or with slow playing speed).

In operation 620, when the time period is equal to or greater than the reference time, the wearable device 101 may perform operation 625. In contrast, in the operation 620, when the time is less than the reference time, the wearable device 101 may perform the operation 620 again. For example, the wearable device 101 may identify whether the time period is greater than or equal to the reference time.

In operation 625, the wearable device 101 may change the size and the position of the content. According to an embodiment, the wearable device 101 may change the size and the position of the content in response to identifying that the time period is greater than or equal to the reference time. For example, the wearable device 101 may change the first size and the first area of the content to a second size different from the first size and a second area different from the first area, respectively. According to an embodiment, the wearable device 101 may identify the second size and the second area based on the capability information. For example, the wearable device 101 may identify the second area and the second size based on the capability information including the focal length preferred by the user. For example, the second area may indicate an area changed from the first area for changing to the focal length preferred by the user. For example, the second area may indicate a position in the virtual environment where the focal length indicates a second distance, which is linearly changed from the first area. The second distance may indicate the focal length preferred by the user or a focal length between the first distance and the focal length preferred by the user. In other words, in the second area, a depth identified from a reference position corresponding to the user in the virtual environment may be different from that of the first area. For example, when the second distance from the reference position corresponding to the user in the virtual environment is greater than the first distance, the second size may be greater than the first size. The second size may be expanded from the first size. Further, for example, when the second distance from the reference position corresponding to the user in the virtual environment is closer than the first distance, the second size may be smaller than the first size. The second size may be reduced from the first size. Even in the case described above, the size of externally displayed content as recognized by the user may be kept constant. Specific details in this regard will be described with reference to FIG. 7 below.

According to an embodiment, the change in a size and a position of the content may repeat its reduction and expansion. For example, the wearable device 101 may extend the size of the content from the first size to the second size, and then, may reduce the size of the content from the second size back to the first size. Alternatively, for example, the wearable device 101 may reduce the size of the content from the second size to the first size, and then may extend the size of the content back again from the first size to the second size. Alternatively, for example, the wearable device 101 may repeat the reduction and the expansion at a specified interval.

Referring to FIG. 6, the wearable device 101 may change the size and the position of the content, based on identifying that the time period is greater than or equal to the reference time. For example, the wearable device 101 may change from the content of the first size and the first position to the content of the second size and the second position. Thereafter, in response to (based on) identifying that the time period is greater than or equal to the reference time, the wearable device 101 may change from the content of the second size and the second position to the content of a third size and a third position. In some embodiments, the third position, which is changed from the first position through the second position, may change linearly (or proportionally). Such a linear change may indicate that it is changed by a specified length. For example, the specified length may be in a centimeter unit. However, embodiments of the disclosure are not limited thereto. Further, while the content is changed from the first position to the third position, the size of the content may be linearly changed from the first size through the second size to the third size. The size of the content may be linearly changed in proportion to the position of the content that is linearly changed. However, embodiments of the disclosure are not limited thereto.

While FIG. 6 illustrates an example of changing the size and the position of the content in response to identifying that the time period for which the content is displayed is greater than or equal to the reference time, but the embodiments of the disclosure are not limited thereto.

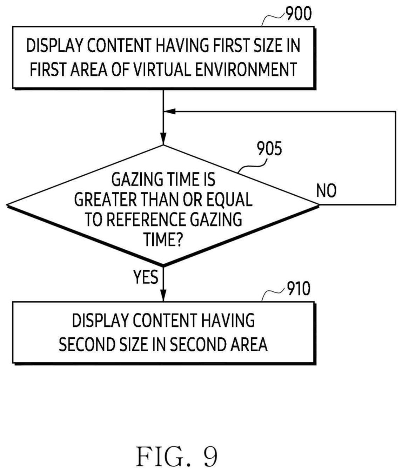

According to an embodiment, when the time period is equal to or greater than the reference time, the wearable device 101 may change the size and the position of the content based on determining (or identifying) whether the time period for which the user of the wearable device 101 gazes at the content (hereinafter, referred to as 'gazing time') is equal to or greater than the reference gazing time. Specific details related thereto will be described with reference to FIG. 9 below.

According to an embodiment, the wearable device 101 may identify whether to change the size and the position of the content, based on another condition. For example, when the eyesight protection function is set for the content, the wearable device 101 may identify the size and the position of the content to be changed. For example, when the content is of a web page, it is common for the web page to be used for a specified time, and thus the eyesight protection function may be set for the content. In other words, the eyesight protection function may be set for each content. Further, for example, the wearable device 101 may identify whether the content is a visual object floated on the display 520. For example, the floated visual object may represent an object always displayed in a portion of the display area of the display 520, regardless of a position in the virtual environment. When the content is the floated visual object, the wearable device 101 may change the size and the position of the content.

Further, in FIG. 6, an example in which the content is extended as it moves away or reduced as it gets close has been described, but the embodiments of the disclosure are not limited thereto. For example, the content may be repeatedly reduced or extended within a range of a focal length defined by a minimum distance and a maximum distance for the focal length of the user included in the capability information. In other words, the wearable device 101 may change and display the position and the size of the content within the range.

In operation 630, the wearable device 101 may display the content based on the changed size and position. For example, the wearable device 101 may display the content having the second size in the second area. According to an embodiment, the wearable device 101 may render an image (or images) for displaying the content, based on the changed size and position. As the rendered image is displayed through the display area of the display 520, the content having the second size may be displayed in the second area.

According to an embodiment, the wearable device 101 may maintain a value indicating a z-index of the content while the position of the content is changed from the first area to the second area. For example, when the position of the content is changed from the first area to the second area, the wearable device 101 may set the value to a value higher than a second value indicating a z-index of the second content located between the first area and the second area. In other words, the value indicating the z-index of the content may be a value higher than the second value indicating the z-index of the second content. For example, as the z-index has a higher value, it may be displayed closer to a reference position corresponding to the user in the virtual environment. Based on the setting, as the position of the content is changed from the first area to the second area, it is possible to prevent the second content from being displayed on the content. According to an embodiment, the wearable device 101 may display the content by rendering the content, based on the z-index. For example, because the second value of the second content is lower than the value of the content, the wearable device 101 may render only the content. Accordingly, the wearable device 101 may display only the content. Alternatively, for example, after rendering both the content and the second content, the wearable device 101 may refrain from displaying the second content having a z-index lower than the content, and may display only the content. In the above-described example, it is described that as the z-index has a higher value, the wearable device 101 displays the content closer to the reference position, but the embodiments of the disclosure are not limited thereto. For example, according to the rendering scheme, as the z-index has a lower value, the wearable device 101 may display the content closer to the reference position.

According to an embodiment, the content having the second size in the second area may be displayed through the at least part of the display area of the display 520 of the wearable device 101. The at least part for displaying the content having the second size in the second area may correspond to the at least part for displaying the content having the first size in the first area. In other words, the area of the at least part for displaying the content having the second size in the second area may correspond to the area of the at least part for displaying the content having the first size in the first area. However, the image (or images) for displaying the content having the second size in the second area may be different from the image (or images) for displaying the content having the first size in the first area. For example, a position in the display area of an image (or images) for displaying the content having the second size in the second area may be different from a position in the display area of an image (or images) for displaying the content having the first size in the first area.

As described above, the display 520 may include a plurality of displays (e.g., the first display 250-1 and the second display 250-2 of FIG. 2) (or display areas). For example, in order to display the content having the second size in the second area, the wearable device 101 may display a third image through at least a portion of the first display area of the first display 250-1 and a fourth image through at least a portion of the second display area of the second display 250-2. The third image and the fourth image may represent images for displaying the content having the second size in the second area. For example, the first display area may be positioned with respect to (facing) the user's left eye. For example, the second display area may be positioned with respect to (facing) the user's right eye. Such a positioning with respect to the left eye or the right eye may refer to being positioned in an area that is visible through the left eye or the right eye of the user. In the example described above, while description is made of an example of the wearable device 101 utilizing a scheme of representing the content and the depth thereof using binocular parallax, the embodiments of the disclosure are not limited thereto. For example, the wearable device 101 having a varifocal lens may display a content having different depths (or focal lengths) using the varifocal lens within the display 520, even without using the binocular parallax.

FIG. 7 illustrates examples of a display area of a display for representing a content according to a focal length, in accordance with embodiments of the disclosure.

In FIG. 7, an example of a method in which the display 520 of the wearable device 101 includes two displays 250-1 and 250-2 (or display areas) and expresses a depth of a content in a virtual environment based on binocular parallax is described. However, embodiments of the disclosure are not limited thereto. For example, the wearable device 101 including the varifocal lens may display the content having different depths (or focal lengths) using the varifocal lens inside the display 520, even without using the binocular parallax. The depth may be identified based on a distance from a reference position in the virtual environment corresponding to a user of the wearable device 101 to the content.

FIG. 7 illustrates an example 700 of displaying the content having the first size in the first area and another example 750 of displaying the content having the second size in the second area, which are examples as described referring to FIG. 6. The second area may indicate a position in the virtual environment corresponding to a focal length farther than the first area. Accordingly, the second size may be an extended size greater than the first size. While FIG. 7 illustrates an example in which the second area represents a focal length farther than the first area, embodiments of the disclosure are not limited thereto. For example, the second area may represent a focal length closer than that of the first area. In such a case, the second size may be reduced from the first size.

Referring to the example 700 of FIG. 7, in order to display the content having the first size in the first area, the wearable device 101 may display the first image 700-1 through the first display 250-1, and may display the second image 700-2 through the second display 250-2. For example, the wearable device 101 may display the first image 700-1 through at least a portion of the first display area of the first display 250-1. In addition, the wearable device 101 may display the second image 700-2 through at least a portion of the second display area of the second display 250-2. An area (or a first displaying size) of the at least a portion of the first display area for the first image 700-1 may correspond to an area (or a first displaying size) of the at least a portion of the second display area for the second image 700-2. In this case, a position of the at least part of the first display area for the first image 700-1 may be different from a position of the at least part of the second display area for the second image 700-2. For example, coordinates of a designated position 710 (e.g., an upper left vertex) of the first image 700-1 may be (x1, y1), and coordinates of a designated position 720 (e.g., an upper left vertex) of the second image 700-2 may be (x2, y2). The content having the first size located in the first area may be displayed, based on a difference between the designated position 710 and the designated position 720. In other words, a depth of the content may be identified based on the difference. For example, the depth of the content may be calculated as Equation 1 below.

$$z = \frac{b * f}{d} \quad \text{(Equation 1)}$$

In Equation 1, 'z' represents a depth of the content in the virtual environment, 'b' represents a baseline between both eyes of a user, 'f' represents a focal length of a lens of the display 520 on which the content is to be displayed, and 'd' represents a disparity between images for the content. For example, a difference between the images may indicate a difference between coordinates x1 of the designated position 710 of the first image 700-1 and coordinates x2 of the designated position 720 of the second image 700-2.

Referring to the example 750 of FIG. 7, in order to display the content having the second size in the second area, the wearable device 101 may display a third image 750-1 through the first display 250-1, and may display a fourth image 750-2 through the second display 250-2. For example, the wearable device 101 may display the third image 750-1 through at least a portion of the first display area of the first display 250-1. In addition, the wearable device 101 may display the fourth image 750-2 through at least a portion of the second display area of the second display 250-2. An area (or a second displaying size) of the at least a portion of the first display area for the third image 750-1 may correspond to an area (or a second displaying size) of the at least a portion of the second display area for the fourth image 750-2. In other words, the first displaying size for displaying the first image 700-1 and the second image 700-2 may be substantially the same as the second displaying size for displaying the third image 750-1 and the fourth image 750-2. In this case, the position of the at least a portion of the first display area for the third image 750-1 may be different from the position of the at least a portion of the second display area for the fourth image 750-2. For example, coordinates of a designated position 760 (e.g., an upper left vertex) of the third image 750-1 may be (x3, y3), and coordinates of a designated position 770 (e.g., an upper left vertex) of the fourth image 750-2 may be (x4, y4). Based on another difference between the designated position 760 and the designated position 770, the content having the second size located in the second area may be displayed. In other words, the depth of the content may be identified based on the difference.

A difference d1 between the designated position 710 and the designated position 720 of the example 700 may be greater than another difference d2 between the designated position 760 and the designated position 770 of the example 750. For example, the difference d1 may be identified based on (x1, y1) and (x2, y2). For example, the other difference d2 may be identified based on (x3, y3) and (x4, y4). In the above-described example, the difference d1 may be a value greater than the other difference d2. This may be because the content having the first size in the first area is located at a focal length closer than the content having the second size in the second area. In other words, the image (e.g., the first image 700-1) displayed on the first display 250-1 and the image (e.g., the second image 700-2) displayed on the second display 250-2, when the focal length is closer, may be further different from the image (e.g., the third image 750-1) displayed on the first display 250-1 and the image (e.g., the fourth image 750-2) displayed on the second display 250-2, when the focal length is farther. For example, the difference between the positions at which the image (e.g., the first image 700-1) displayed on the first display 250-1 and the image (e.g., the second image 700-2) displayed on the second display 250-2 are displayed, when the focal length is close, may be greater than the difference between the positions at which the image (e.g., the third image 750-1) displayed on the first display 250-1 and the image (e.g., the fourth image 750-2) displayed on the second display 250-2 are displayed, when the focal length is farther. However, even in the above-described examples, the size of the area occupied by each image in the display area may be kept substantially the same. It may be to keep the size of the content recognized by the user constant, even though the focal length of the user is changed.

According to an embodiment, the wearable device 101 may perform a scaling in generating the images displayed on the displays 250-1 and 250-2. For example, the scaling may be referred to as 'screen interpolation.' For example, even though the size of the content in the virtual environment is changed, the wearable device 101 may maintain the size of the image displayed on the displays 250-1 and 250-2 to be substantially the same. In this context, the wearable device 101 may perform a down-scaling in generating an image for the content having a relatively large size compared to a reference size. In other words, the images (e.g., the third image 700-3 and the fourth image 700-2) for the content having the second size in the virtual environment may include a portion of the content having the second size based on the downscaling. Alternatively, in this case, the wearable device 101 may perform an up-scaling in generating an image for the content having a relatively small size compared to the reference size. In other words, the images (e.g., the first image 700-1 and the second image 700-2) for the content having the first size in the virtual environment may further include the content having the first size and a portion interpolated for at least a part of the content. In an embodiment, the reference size is a size between the first size and the second size, but embodiments of the disclosure are not limited thereto. For example, when the first size is the reference size, the images (e.g., the first image 700-1 and the second image 700-2) for the content having the first size may be generated without scaling. In this case, the images (e.g., the third image 700-3 and the fourth image 700-2) for the content having the second size may be generated based on the down-scaling.

Referring to the foregoing description, an apparatus and a method according to an embodiment of the disclosure may display a content using a variable focal length, while maintaining a user's viewing experience using the content. Accordingly, an apparatus and a method according to an embodiment of the disclosure may prevent a user's capability to adjust a focal length from deteriorating, when the user watches the content. Further, an apparatus and a method according to embodiments of the disclosure may provide a better user experience, such as viewing substantially the same content, even when the focal length is changed. Furthermore, an apparatus and a method according to embodiments of the disclosure may perform training to protect a user's eyesight, without consuming additional resources. Specific details related to such training will be described below with reference to FIG. 8.

FIG. 8 illustrates an example of an operation flow for a method of adjusting a focal length and obtaining a result of adjustment, based on capability information for the focal length, in accordance with embodiments of the disclosure.

At least some of the above method of FIG. 8 may be performed by the wearable device 101 of FIG. 5. For example, at least some of the method may be controlled by the processor 120 of the wearable device 101.

Referring to FIG. 8, in operation 800, the wearable device 101 may obtain capability information about a focal length of a user. For example, the capability information may indicate information about a capability of the user to adjust the focal length. For example, the wearable device 101 may perform eye calibration based on the user wearing the wearable device 101 or an input of the user. For example, when the user initially wears the wearable device 101, the eye calibration may be performed. The eye calibration may indicate a function of measuring the capability information of the user. For example, a minimum distance and a maximum distance for the focal length of the user, and a focal length preferred by the user may be identified, based on the eye calibration. The focal length preferred by the user may indicate a focal length that the user's eyes adjust most quickly and accurately. The maximum distance may be referred to as a limit distance to the focal length of the user.

In operation 805, the wearable device 101 may display the content in a state of the eyesight protection function being activated. For example, the wearable device 101 may display the content having a designated size in a designated area within the virtual environment. The wearable device 101 may identify whether the eyesight protection function has been activated, while displaying the content having the designated size in the designated area. Referring to the above description, displaying the content having the designated size in the designated area may be performed before, simultaneously with, or after identifying whether the eyesight protection function is activated. In the following example, for convenience of description, an example in which the content having a first size is displayed in a first area will be described.

In operation 810, the wearable device 101 may change the size and the position of the content, based on the capability information. For example, the capability information may indicate the capability information for the user obtained based on the eye calibration. According to an embodiment, the wearable device 101 may change the size and the position of the content, based on the capability information obtained based on the eye calibration. For example, the size and the position of the content may be changed based on a range of the focal length of the user included in the capability information. For example, the range may be defined based on the minimum distance and the maximum distance for the focal length of the user. For example, the wearable device 101 may change the range from a first distance, which is a focal length corresponding to the first area, to a second distance different from the first distance within the range. In this case, the wearable device 101 may be changed to the position and the size of the content corresponding to the second distance. For example, the wearable device 101 may change the size and the position of the content corresponding to the second distance to a second size and a second area. In the second area, the depth identified from a reference position corresponding to the user within the virtual environment may be different from that of the first area.

According to an embodiment, the change in the size and the position of the content may be repeatedly performed for reduction and extension. For example, the wearable device 101 may extend the size of the content from the first size to the second size, and then may reduce the size of the content from the second size back to the first size. Alternatively, for example, the wearable device 101 may reduce the size of the content from the second size to the first size, and then may again extend the content from the first size back to the second size. Alternatively, for example, the wearable device 101 may repeat the reduction and the extension at a specified interval.

In operation 815, the wearable device 101 may identify a result of adjusting the focal length of the user for the changed content. According to an embodiment, the wearable device 101 may display the content based on the changed position and size. For example, the wearable device 101 may display the content having the second size in the second area. While the content having the second size is displayed in the second area, the wearable device 101 may identify a movement of the user's eyeball. For example, based on the movement of the eyeball, the wearable device 101 may identify the result of adjusting the focal length. For example, the wearable device 101 may identify an actual focal length of the user identified based on the movement of the eyeball. The wearable device 101 may obtain a result including a difference between the second distance corresponding to the second area in which the content having the second size is displayed and the actual focal length. For example, the wearable device 101 may identify, based on the result, how similarly the user's eyeball moved to a targeted focal length (e.g., the second distance).

In operation 820, the wearable device 101 may store the identified result. According to an embodiment, the wearable device 101 may store the identified result in the memory 130. For example, the identified result may be used in case where the wearable device 101 changes the size and the position of the content having the second size in the second area. In other words, the capability information may be updated based on the identified result.

The method as described referring to FIG. 8 may include measuring capability information for the focal length, changing a size and a position of the content based on the measured capability information, identifying a result of adjustment by measuring an actual focal length of a user while displaying the changed content, and updating the capability information based on the identified result. However, the embodiments of the disclosure are not limited thereto. According to an embodiment, the wearable device 101 may change the size and the position of the content to correspond to a focal length out of a range of the focal length identified based on the capability information. In other words, the size and the position of the content may be changed to have a focal length out of the range. The focal length out of the range may be referred to as a training range. According to an embodiment, the wearable device 101 may perform training on the ability to adjust the focal length by changing the size and the position of the content to the focal length within the training range. For example, when the training is performed, the wearable device 101 may obtain information about the training range in which the size and the position of the content are changed. For example, the information about the training range may include information about the focal length within the training range and a length by which the focal length is out of the range within the training range. Further, the wearable device 101 may identify a degree to which the user's adjustment ability is predicted to improve to adjust according to the training. According to an embodiment, the wearable device 101 may display information on the training range and a visual object indicating the degree, on the display 520. Accordingly, the user may identify a training result for the ability to adjust the focal length of the user.

According to an embodiment, the wearable device 101 may perform an eyesight correction of the user, based on the training. For example, the wearable device 101 may perform the eyesight correction of the user by adjusting the focal length within the training range. According to an embodiment, the wearable device 101 may perform the training according to a mode of the wearable device 101. For example, the wearable device 101 may activate a training function based on identifying that the mode is a training mode. Activating the training function may be referred to as performing the training. In contrast, the wearable device 101 may deactivate the training function based on identifying that the mode is another mode (e.g., a normal mode or a content concentration mode). Deactivating the training function may be referred to as refraining from or skipping the training function. Further, according to an embodiment, the wearable device 101 may deactivate the training function, based on identifying that a specified function is executed. For example, the specified function may include a function for eye protection of the user. For example, the specified function may include a blue light filter feature for a screen displayed through a display (e.g., the displays 250-1 and 250-2) of the wearable device 101. Alternatively, for example, the specified function may include a night mode (or a dark mode) for a screen on which a display (e.g., the displays 250-1 and 250-2) of the wearable device 101 is displayed. Alternatively, for example, the specified function may include a low power mode for reducing battery consumption of the wearable device 101. However, embodiments of the disclosure are not limited thereto. Further, according to an embodiment, the wearable device 101 may deactivate the training function, based on the usage time. For example, the usage time may indicate a time duration for which the user used the virtual environment provided via the wearable device 101. For example, when the usage time exceeds a certain reference usage time, the wearable device 101 may deactivate the training function. This may be an operation to protect the user's eyesight.

FIG. 9 illustrates an example of a flowchart for a method of displaying a content having a different size according to a focal length in a virtual environment, in accordance with embodiments of the disclosure.

At least a part of the above method of FIG. 9 may be performed by the wearable device 101 of FIG. 5. For example, at least a part of the method may be controlled by the processor 120 of the wearable device 101.

Referring to FIG. 9, in operation 900, the wearable device 101 may display a content having a first size in a first area of the virtual environment. According to an embodiment, the wearable device 101 may obtain an input for displaying the content having the first size in the first area. For example, the wearable device 101 may display the virtual environment in response to (based on) an execution of a software application for providing the virtual environment. For example, the software application may represent an example of one service providing the virtual environment. For example, when the software application is executed, the wearable device 101 may obtain an input for displaying the content. For example, the input may include a user input of a user wearing the wearable device 101.

According to an embodiment, the wearable device 101 may display the content having the first size in the first area, based on the input. For example, the first area may be referred to as an initial area in which the content is to be displayed, the area being set by the user. For example, the 'first size' may be referred to as an 'initial size' in which the content is displayed, the size being set by the user. For example, the first size (or the initial size) may indicate an area of the content with respect to a direction in which the user views the content. For example, the first area may indicate a position in the virtual environment where a focal length of the user is a first distance. According to an embodiment, the wearable device 101 may render an image (or images) for displaying the content, based on the first size and the first area. As the rendered image is displayed through the display area of the display 520, the content having the first size may be displayed in the first area.

According to an embodiment, the content having the first size in the first area may be displayed through at least a portion of a display area of the display 520 of the wearable device 101. For example, the display area may represent an entire area in which an image may be displayed on the display 520. For example, the at least a portion may represent a partial area for displaying the content having the first size in the first area of the display area. When the display 520 includes a plurality of displays (e.g., the first display 250-1 and the second display 250-2 of FIG. 2) (or display areas), the wearable device 101 may display a first image through at least a portion of the first display area of the first display 250-1 and a second image through at least a portion of the second display area of the second display 250-2. The first image and the second image may represent images for displaying the content having the first size in the first area. For example, the first display area may be positioned with respect to (facing) the user's left eye. For example, the second display area may be positioned with respect to (facing) the user's right eye. Such positioning with respect to the left eye or the right eye may represent that it is located in an area visible through the left eye or the right eye of the user. In some embodiments, the wearable device 101 utilizes a method of representing the content and its depth using binocular parallax, but embodiments of the disclosure are not limited thereto. For example, the wearable device 101 having the varifocal lens may display the content having a different depth (or focal length) using the varifocal lens inside the display 520, even without using the binocular parallax.

In operation 905, the wearable device 101 may identify whether a gazing time is greater than or equal to a reference gazing time. For example, the wearable device 101 may identify whether the gazing time of gazing at the content is greater than or equal to the reference gazing time. For example, after recognizing that a time period for which the content is displayed is equal to or greater than a reference time, the wearable device 101 may determine whether the gazing time is equal to or greater than the reference gazing time. However, embodiments of the disclosure are not limited thereto. For example, the wearable device 101 may identify whether the gazing time is equal to or greater than the reference gazing time, without performing a comparison of the time period and the reference time. Alternatively, for example, the wearable device 101 may perform the comparison between the time period and the reference time and the comparison between the gazing time and the reference gazing time together.

According to an embodiment, the wearable device 101 may identify whether the eyesight protection function has been activated. The eyesight protection function may indicate a function of changing a position and a size of the content in the virtual environment in order to protect the user's eyesight. In this case, as the position and the size of the content are changed, the focal length may be changed while the user views the content. Further, while the user views the content, as the size is changed based on the position of the content, the size in which the content is externally displayed as recognized by the user may be maintained constant. The externally displayed size may be identified based on a proportion (or a resolution) of an area (e.g., at least a portion) for the content to the display area of the display 520. In other words, even if the position and the size of the content in the virtual environment are changed, the size in which the content is externally displayed may remain constant. Accordingly, the viewing experience of the user may remain constant while the user watches the content and the focal length of the user may be dynamically changed. Accordingly, the user's eyesight may be protected according to the dynamic focal length.

According to an embodiment, the wearable device 101 may identify whether the eyesight protection function has been activated in the software application providing the virtual environment. According to an embodiment, the wearable device 101 may identify whether the eyesight protection function has been activated in a setting of the wearable device 101. In other words, the eyesight protection function may be applied to each software application or to all software applications. Further, for example, the eyesight protection function may be set for each content.

According to an embodiment, when the eyesight protection function is activated, the wearable device 101 may identify whether the gazing time is greater than or equal to the reference gazing time. According to an embodiment, the wearable device 101 may identify whether the gazing time is equal to or greater than the reference gazing time, in response to identifying that the eyesight protection function is activated. For example, the gazing time may indicate a time period for which the user's gaze tracked through the camera 510 is located in an area corresponding to the content. For example, the area corresponding to the content may represent the at least a portion of the display area.

According to an embodiment, the reference gazing time may be identified based on at least one of capability information of adjusting a focal length of the user or a characteristic of the content. The capability information may include at least one of a reaction speed related to adjustment of the focal length of the user, a minimum length and a maximum length for the focal length of the user, or a focal length preferred by the user. For example, the characteristic of the content may include at least one of a play speed of the content or a type of the content. The type of content may include a static type such as a text or a picture or a dynamic type such as a video. For example, for a person (e.g., an elderly person) having a slow reaction speed, the reference gazing time may be set to be longer than a person (e.g., young people) having a fast reaction speed. Alternatively, the reference gazing time may be set to be longer when the content is dynamic (or when the play speed is relatively faster) than when the content is static (or when its play speed is relatively slower).

Alternatively, according to an embodiment, when the eyesight protection function is deactivated, the wearable device 101 may maintain the size and the position of the content. For example, the wearable device 101 may maintain the size of the content in the first size and the position in the first area. For example, based on identifying that the eyesight protection function is deactivated, the wearable device 101 may maintain the state of displaying the content having the first size in the first area.

In operation 910, the wearable device 101 may display the content having the second size in the second area. For example, based on identifying that the gazing time is equal to or greater than the reference gazing time, the wearable device 101 may display, on the at least a portion of the display, the content having a second size different from the first size in a second area of which depth identified from a reference position corresponding to the user in the virtual environment is different from that of the first area.

According to an embodiment, the wearable device 101 may change the size and the position of the content. For example, the wearable device 101 may change the size and the position of the content in response to identifying that the gazing time is equal to or greater than the reference gazing time. For example, the wearable device 101 may change the first size and the first area of the content to the second size different from the first size and the second area different from the first area, respectively.

According to an embodiment, the wearable device 101 may identify the second size and the second area based on the capability information. For example, the wearable device 101 may identify the second area and the second size, based on the capability information including the focal length preferred by the user. For example, the second area may indicate an area changed from the first area to change to the focal length preferred by the user. For example, the second area may indicate a position in the virtual environment in which the focal length indicates a second distance, the second area being linearly changed from the first area. The second distance may indicate the focal length preferred by the user or a focal length between the first distance and the focal length preferred by the user. For example, when the second distance from the reference position corresponding to the user in the virtual environment is greater than the first distance, the second size may be greater than the first size. In other words, the second size may be extended from the first size. Alternatively, when the second distance from the reference position corresponding to the user in the virtual environment is closer than the first distance, the second size may be smaller than the first size. In other words, the second size may be reduced from the first size. Even in the above-described case, the size in which the content is externally displayed as recognized by the user may be maintained constant.

FIG. 9 illustrates an example of changing the size and the position of the content in response to identifying that the gazing time of gazing at the content is equal to or greater than the reference gazing time. However, the embodiments of the disclosure are not limited thereto. According to an embodiment, the wearable device 101 may identify whether to change the size and the position of the content, based on other condition. For example, when the eyesight protection function is set for the content, the wearable device 101 may identify that the size and the position of the content are changed. For example, when the content is a web page in which the web page is typically utilized in such a manner that it is viewed for a specified period of time, the eyesight protection function may be set for the content. Further, for example, the wearable device 101 may identify whether the content is a visual object floated on the display 520. For example, the floated visual object may represent an object always displayed in a portion of the display area of the display 520, regardless of any position in the virtual environment. When the content is the floated visual object, the wearable device 101 may change the size and the position of the content.

Further, FIG. 9 describes an example in which the content is extended as it moves away or is reduced as it gets close. But embodiments of the disclosure are not limited thereto. For example, the content may be repeatedly reduced and extended within a range of a focal length defined by a minimum distance and a maximum distance for the focal length of the user included in the capability information. In other words, the wearable device 101 may change and display the position and the size of the content within the range.

According to an embodiment, the wearable device 101 may display the content based on the changed second size and second area. For example, the wearable device 101 may display the content having the second size in the second area. According to an embodiment, the wearable device 101 may render an image (or images) for displaying the content, based on the changed size and position. As the rendered image is displayed on the display area of the display 520, the content having the second size may be displayed in the second area.

According to an embodiment, the wearable device 101 may maintain a value indicating a z-index of the content while the position of the content is changed from the first area to the second area. For example, while the position of the content is changed from the first area to the second area, the wearable device 101 may set the value to a value higher than a second value indicating a z-index of a second content located between the first area and the second area. In other words, the value indicating the z-index of the content may be higher than the second value indicating the z-index of the second content. For example, as the z-index has a higher value, the z-index may be displayed closer to a reference position corresponding to the user in the virtual environment. Based on the setting, as the position of the content is changed from the first area to the second area, the second content may be prevented from being displayed on the content. According to an embodiment, the wearable device 101 may display the content by rendering based on a z-index. For example, because the second value of the second content is lower than the value of the content, the wearable device 101 may render only the content. Accordingly, the wearable device 101 may display only the content. Alternatively, for example, after rendering both the content and the second content, the wearable device 101 may refrain from displaying the second content having a z-index lower than the content, and may display only the content.

According to an embodiment, the content having the second size in the second area may be displayed through the at least part of the display area of the display 520 of the wearable device 101. The at least part for displaying the content having the second size in the second area may correspond to the at least part for displaying the content having the first size in the first area. In other words, the area of the at least part for displaying the content having the second size in the second area may correspond to the area of the at least part for displaying the content having the first size in the first area. However, an image (or images) for displaying the content having the second size in the second area may be different from an image (or images) for displaying the content having the first size in the first area. For example, a position of the image (or images) for displaying the content having the second size in the second area within the display area may be different from a position of the image (or images) for displaying the content having the first size in the first area within the display area.

As in the example described above, the display 520 may include a plurality of displays (e.g., the first display 250-1 and the second display 250-2 of FIG. 2) (or display areas). For example, in order to display the content having the second size in the second area, the wearable device 101 may display a third image through at least a portion of the first display area of the first display 250-1 and a fourth image through at least a portion of the second display area of the second display 250-2. The third image and the fourth image may represent images for displaying the content having the second size in the second area. For example, the first display area may be positioned with respect to (facing) the user's left eye. For example, the second display area may be positioned with respect to (facing) the user's right eye. Such positioning with respect to the left eye or the right eye may indicate that it is located in an area visible through the left eye or the right eye of the user. In the above-described example, it is described an example of the wearable device 101 using a method of indicating the content and the depth of the content using binocular parallax, but the embodiments of the disclosure are not limited thereto. For example, the wearable device 101 including the varifocal lens may display the content having different depths (or focal lengths) using the varifocal lens inside the display 520, even without using the binocular parallax.

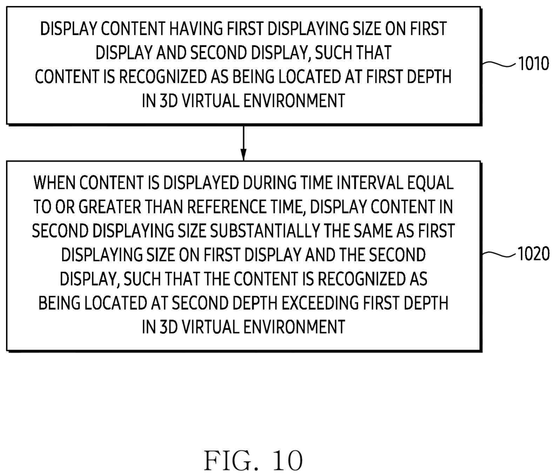

FIG. 10 illustrates an example of a flowchart for a method of displaying a content according to a depth in a virtual environment, in accordance with embodiments of the disclosure.

At least part of the method of FIG. 10 may be performed by the wearable device 101 of FIG. 5. For example, at least part of the method may be controlled by the processor 120 of the wearable device 101.

In operation 1010, the wearable device 101 may display the content having the first displaying size on the first display 250-1 and the second display 250-2 such that the content is recognized as being located at the first depth in the 3D virtual environment.

For example, the 3D virtual environment may represent the virtual environment providing an XR environment. For example, the first depth may indicate a position in the 3D virtual environment in which the focal length of the user of the wearable device 101 is a first distance (e.g., the first distance 430 of FIG. 4B). For example, the first depth may be referred to as a first area in the 3D virtual environment.

For example, the wearable device 101 may be displayed through at least a portion of display areas of the first display 250-1 and the second display 250-2. For example, the at least a portion may indicate a portion or all of a display area for displaying the content having the first displaying size in the display area. For example, the wearable device 101 may display a first image through at least a portion of a first display area of the first display 250-1 and a second image through at least a portion of a second display area of the second display 250-2. The first image and the second image may represent images for displaying the content having the first displaying size. For example, the first display area may be positioned with respect to (facing) the user's left eye. For example, the second display area may be positioned with respect to (facing) the user's right eye. Such positioning with respect to the left eye or the right eye may indicate that it is located in an area visible through the left eye or the right eye of the user.

According to an embodiment, the wearable device 101 may obtain an input for displaying the content. For example, the wearable device 101 may display the virtual environment in response to execution of a software application for providing the 3D virtual environment. For example, the software application may represent an example of one service that provides the virtual environment. For example, in a state of the software application being executed, the wearable device 101 may obtain an input for displaying the content. For example, the input may include a user input of a user wearing the wearable device 101.

According to an embodiment, the wearable device 101 may identify whether an eyesight protection function has been activated. The eyesight protection function may indicate a function of changing a position and a size of the content in the 3D virtual environment to protect a user's eyesight. In this case, as the position and the size of the content are changed, a focal length while the user views the content may be changed. Further, while the user views the content, as the size is changed based on the position of the content, a size in which the content is externally displayed as recognized by the user may be maintained constant. The externally displayed size may be identified based on a proportion (or a resolution) of the area (e.g., the at least a portion) for the content to the display area of the first display 250-1 and the second display 250-2. In other words, even if the position and the size of the content in the virtual environment are changed, the size in which the content is externally displayed may be maintained substantially constant. Accordingly, while the user watches the content, the viewing experience of the user may remain constant, and the focal length of the user may be dynamically changed.

According to an embodiment, the wearable device 101 may identify whether the eyesight protection function has been activated in the software application providing the 3D virtual environment. According to an embodiment, the wearable device 101 may identify whether the eyesight protection function has been activated within a setting of the wearable device 101. In other words, the eyesight protection function may be applied to each software application or to all software applications. Further, for example, the eyesight protection function may be set for each content.

According to an embodiment, when the eyesight protection function is deactivated, the wearable device 101 may maintain the size and the position of the content in the 3D virtual environment. For example, the wearable device 101 may maintain the size of the content in a first size and the position in a first area. For example, in response to identifying that the eyesight protection function is deactivated, the wearable device 101 may maintain a state of displaying the content having the first size in the first area.

According to an embodiment, when the eyesight protection function is activated, the wearable device 101 may identify whether a time interval for which the content is displayed is greater than or equal to a reference time. According to an embodiment, in response to identifying that the eyesight protection function is activated, the wearable device 101 may identify whether the time interval for which the content is displayed is greater than or equal to the reference time.

According to an embodiment, the reference time may be identified based on at least one of capability information for adjusting a focal length of the user or a characteristic of the content. The capability information may include at least one of a reaction speed related to adjustment of the focal length of the user, a minimum length and a maximum length for the focal length of the user, or a focal length preferred by the user. For example, the characteristic of the content may include at least one of a play speed of the content or a type of the content. The type of content may include a static type such as a text or a picture or a dynamic type such as a video. For example, the reference time may be set longer for a person with a slower reaction speed (e.g., an elderly person) than for a person with a faster reaction speed (e.g., a young person). Alternatively, the reference time may be set longer for the content being dynamic (or with fast playing speed) than for the content being static (or with slow playing speed).

In operation 1020, when the content is displayed during the time interval equal to or greater than the reference time, the wearable device 101 may display the content in a second displaying size substantially the same as the first displaying size on the first display 250-1 and the second display 250-2 so as for the content to be recognized as being located at a second depth exceeding the first depth in the 3D virtual environment. In the above example is described an example of the second depth exceeding the first depth will be described, but embodiments of the disclosure are not limited thereto. For example, the second depth may be less than or equal to the first depth.

According to an embodiment, the wearable device 101 may change the size of the content in the 3D virtual environment while changing the position in the 3D virtual environment from the first depth to the second depth. According to an embodiment, the wearable device 101 may change the size of the content in response to identifying that the time period is greater than or equal to the reference time. For example, the wearable device 101 may change the first size and the first area of the content to a second size different from the first size and a second area different from the first area, respectively.

According to an embodiment, the change in the size and the position of the content may be repeatedly performed for reduction and extension. For example, the wearable device 101 may extend the size of the content from the first size to the second size, and then may reduce the size of the content from the second size back to the first size. Alternatively, for example, the wearable device 101 may reduce the size of the content from the second size to the first size, and then may extend the content again from the first size back to the second size. Alternatively, for example, the wearable device 101 may repeat the reduction and the extension at a specified period.

Referring to the foregoing, the wearable device 101 may maintain substantially the same a display size in which the content is displayed on the first display 250-1 and the second display 250-2, while changing the position in the 3D virtual environment from the first depth to the second depth. For example, even if the position is changed from the first depth to the second depth, the wearable device 101 may maintain the display size from the first displaying size to the second displaying size that is substantially the same as the first displaying size. In other words, the wearable device 101 may display the content having the second displaying size on the first display 250-1 and the second display 250-2 so as to be recognized as being located at the second depth.

Reference may be made to FIG. 7 for an example of a method in which the wearable device 101 displays the first displaying size and the second displaying size in the display areas of the first display 250-1 and the second display 250-2. Further, reference may be made to FIG. 8 for a specific example of how the wearable device 101 obtains a result for the focal length of the user and performs a training and an eyesight correction based on the result. In addition, reference may be made to FIG. 9 for a specific example of how the wearable device 101 may display the content having the second displaying size at the second depth, based on a time period for which the user's gaze is positioned in an area corresponding to the content having the first displaying size.

As described above, the wearable device 101 may comprise a display 520. The wearable device 101 may comprise a camera 510. The wearable device 101 may comprise a processor 120. The processor 120 may be configured to display a content having a first size in a first area of a virtual environment, through at least a portion of a display area of the display 520. The processor 120 may be configured to identify whether a time period for which a user of the wearable device 101 gazes at the content having the first size is greater than or equal to a reference time, based on the camera 510. The processor 120 may be configured to, based on identifying that the time period is greater than or equal to the reference time, display, through the at least a portion of the display 520, the content having a second size different from the first size in a second area of which depth identified from a reference position corresponding to the user in the virtual environment is different from that of the first area.

According to an embodiment, when the first area indicates a first position in the virtual environment in which a focal length of the user from the reference position corresponds to a first distance and the second area indicates a second position in the virtual environment in which the focal length from the reference position corresponds to a second distance farther than the first distance, the second size may be greater than the first size.

According to an embodiment, when the first area indicates a first position in the virtual environment in which the focal length of the user from the reference position corresponds to a first distance and the second area indicates a second position in the virtual environment in which the focal length from the reference position corresponds to a second distance less than the first distance, the second size may be smaller than the first size.

According to an embodiment, the processor 120 may be configured to identify whether a function for adjusting a focal length of the user has been activated. The processor 120 may be configured to identify whether the time period is greater than or equal to the reference time, in response to identifying that the function is activated. The processor 120 may be configured to maintain displaying of the content having the first size in the first area, through the at least a portion of the display area of the display 520, in response to identifying that the function is deactivated.

According to an embodiment, the processor 120 may be configured to obtain an input for displaying the content. The processor 120 may be configured to display through the at least a portion the content having the first size, in response to the input. Each of the first size and the first area may be designated by the user.

According to an embodiment, the reference time may be identified based on a play speed of the content or capability information for adjusting the focal length of the user. The capability information may include a range of the focal length of the user.

According to an embodiment, the content having the first size in the first area may be displayed based on a first image displayed in a first display area of the display 520 positioned with respect to (facing) the user's left eye and a second image displayed in a second display area of the display 520 positioned with respect to (facing) the user's right eye. The content having the second size in the second area may be displayed based on a third image displayed in the first display area and a fourth image displayed in the second display area.

According to an embodiment, when the second size is greater than the first size, a difference between coordinates for a designated position of the first image and coordinates for the designated position of the second image may be greater than a difference between coordinates for the designated position of the third image and coordinates for the designated position of the fourth image.

According to an embodiment, the processor 120 may be configured to obtain capability information about a focal length of the user, based on performing eye calibration on the user. The processor 120 may be configured to change a size of the content from the first size to the second size and change a position of the content from the first area to the second area, based on the capability information. The capability information may include a range of the focal length of the user.

According to an embodiment, the processor 120 may be configured to identify a result of adjusting the focal length of the user for the content having the second size in the second area, which has been changed based on the capability information. The result may include a difference between the focal length of the user calculated based on the second area and an actual focal length of the user.

According to an embodiment, the processor 120 may be configured to maintain a value indicating a z-index of the content, while a position of the content is changed from the first area to the second area.

According to an embodiment, the processor 120 may be configured to identify whether the content is a visual object floated on the display 520. The processor 120 may be configured to change a size of the content from the first size to the second size and change a position of the content from the first area to the second area, in response to identifying that the content is the floated visual object.

According to an embodiment, the time period may indicate a time period for which the user's gaze is positioned within an area corresponding to the content.

According to an embodiment, the content may include a two-dimensional object or a three-dimensional object in the virtual environment.

As described above, a wearable device 101 may comprise a display 520. The wearable device 101 may comprise a camera 510. The processor 120 may be configured to display, through at least part of a display area of the display 520, a content having a first size in a first area of a virtual environment. The processor 120 may be configured to identify whether a function for adjusting a focal length has been activated. The processor 120 may be configured to maintain displaying the content having the first size in the first area, through the at least part, based on identifying that the function is deactivated. The processor 120 may be configured to, based on identifying that the function is activated, change a position from the first area to a second area having a different depth identified from a reference position in the virtual environment, for adjusting of the focal length, change a size from the first size to a second size according to the adjustment of the focal length, and display the content having the second size in the second area through the at least part. The reference position may indicate a position in the virtual environment corresponding to a user of the wearable device 101.

According to an embodiment, when the first area indicates a position in the virtual environment in which the focal length from the reference position corresponds to a first distance and the second area indicates a position in the virtual environment in which the focal length from the reference position corresponds to a second distance farther than the first distance, the second size may be greater than the first size.

According to an embodiment, the display 520 may comprise a first display area positioned with respect to (facing) a left eye of the user of the wearable device 101 and a second display area positioned with respect to (facing) a right eye of the user. The content having the first size in the first area may be displayed, based on a first image displayed in the first display area and a second image displayed in the second display area. The content having the second size in the second area may be displayed based on a third image displayed in the first display area and a fourth image displayed in the second display area.

According to an embodiment, when the second size is greater than the first size, a difference between a coordinate for a designated position of the first image and a coordinate for the designated position of the second image may be greater than a difference between a coordinate for the designated position of the third image and a coordinate for the designated position of the fourth image.

According to an embodiment, the processor 120 may be configured to obtain capability information for the focal length, based on performing eye calibration on the user. The processor 120 may be configured to change the size from the first size to the second size and change the position from the first area to the second area, based on the capability information. The capability information may include a range of the focal length.

According to an embodiment, the processor 120 may be configured to maintain a value indicating a z-index of the content, while the position is changed from the first area to the second area.

As described above, a wearable device 101 may comprise a first display 250-1 positioned with respect to (facing) a user's left eye. The wearable device 101 may include a second display 250-2 positioned with respect to (facing) the user's right eye. The wearable device 101 may comprise a camera 510. The wearable device 101 may comprise a processor 120. The wearable device 101 may comprise memory storing instructions. The instructions may, when executed by the processor 120, cause the wearable device to display a content having a first displaying size on the first display 250-1 and the second display 250-2 such that the content is perceived in a 3D virtual environment as being positioned at a first depth. The instructions may, when executed by the processor 120, cause the wearable device to, in a case that the content is displayed for a time period greater than or equal to a reference time, display the content as a second displaying size on the first display 250-1 and the second display 250-2, which is substantially same as the first displaying size, such that the content is perceived in the 3D virtual environment as being positioned at a second depth greater than the first depth.

According to an embodiment, wherein a size of the content in the 3D virtual environment at the first depth in the 3D virtual environment may have a first size. The size of the content in the 3D virtual environment at the second depth in the 3D virtual environment may have a second size greater than the first size.

According to an embodiment, the first depth may represent a first position in the 3D virtual environment in which a focal length of the user corresponds to a first length. The second depth may represent a second position in the 3D virtual environment in which the focal length corresponds to a second length greater than the first length.

According to an embodiment, the instructions may, when executed by the processor 120, cause the wearable device to identify whether a function for adjusting of a focal length of the user is activated or deactivated. According to an embodiment, the instructions may, when executed by the processor 120, cause the wearable device to identify whether the time period is greater than or equal to the reference time in response to activating the function. According to an embodiment, the instructions may, when executed by the processor 120, cause the wearable device to maintain displaying the content having the first displaying size on the first display 250-1 and the second display 250-2 such that the content is perceived in the 3D virtual environment as being positioned at the first depth.

According to an embodiment, the instructions may, when executed by the processor 120, cause the wearable device to obtain an input for displaying the content. According to an embodiment, the instructions may, when executed by the processor 120, cause the wearable device to display the content having the first displaying size on the first display 250-1 and the second display 250-2, in response to the input. The first depth may be designated by the user.

According to an embodiment, the reference time is identified based on a play speed of the content or capability information adjusting a focal length of the user. The capability information may include a range of the focal length of the user.

According to an embodiment, the content having the first displaying size on the first display 250-1 and the second display 250-2 may be displayed based on a first image displayed in a first displaying area having the first displaying size of the first display 250-1 and a second image displayed in a second displaying area having the first displaying size of the second display 250-2. The content having the second displaying size on the first display 250-1 and the second display 250-2 may be displayed based on a third image displayed in a third displaying area having the second displaying size of the first display 250-1 and a fourth image displayed in a fourth displaying area having the second displaying size of the second display 250-2.

According to an embodiment, a difference between a coordinate for a designated position of the first image and a coordinate for the designated position of the second image may be greater than a difference between a coordinate for the designated position of the third image and a coordinate for the designated position of the fourth image.

According to an embodiment, the instructions may, when executed by the processor 120, cause the wearable device to obtain capability information adjusting a focal length of the user based on performing an eye calibration of the user. The instructions may, when executed by the processor, cause the wearable device to change a size of the content from the first size to the second size and a position in the 3D virtual environment of the content from the first depth to the second depth based on the capability information. The capability information may include a range of the focal length of the user.

According to an embodiment, the instructions may, when executed by the processor 120, cause the wearable device to identify a result of focal length adjustment of the user with respect to the content having the second displaying size changed based on the capability information. The result may include a difference between a focal length of the user calculated based on the second depth and an actual focal length of the user.

According to an embodiment, the instructions may, when executed by the processor 120, cause the wearable device to maintain a value indicating a z-index of the content while a position in the 3D virtual environment of the content is changed from the first depth to the second depth.

According to an embodiment, the instructions may, when executed by the processor 120, cause the wearable device to identify whether the content is a visual object floated on the first display 250-1 and the second display 250-2. The instructions may, when executed by the processor 120, cause the wearable device to a position in the 3D virtual environment of the content from the first depth to the second depth, in response to identifying that the content is the floated visual object.

According to an embodiment, the instructions may, when executed by the processor 120, cause the wearable device to identify whether a gazing time of the user is greater than or equal to a reference gazing time, in response to the time period greater than or equal to the reference time. The instructions may, when executed by the processor 120, cause the wearable device to display the content having the second displaying size in the second depth based identifying the gazing time is greater than or equal to the reference gazing time. The gazing time may indicate a time period during which the user's gaze is positioned in an area corresponding to the content having the first displaying size.

According to an embodiment, the content may include a two-dimensional object a three-dimensional object in the 3D virtual environment.

The electronic device according to one or more embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that one or more embodiments of the present disclosure and the terms used therein are not intended to limit the technological features set forth herein to particular embodiments and include various changes, equivalents, or replacements for a corresponding embodiment. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with one or more embodiments of the disclosure, the term "module" may include a unit implemented in hardware, software, or firmware, and may be interchangeably used with other terms, for example, "logic", "logic block", "part", or "circuit". A module may be a single integral component, or a minimum unit or part thereof, adapted to perform one or more functions. For example, according to an example, the module may be implemented in a form of an application-specific integrated circuit (ASIC).

One or more embodiments as set forth herein may be implemented as software (e.g., a program 140) including one or more instructions that are stored in a storage medium (e.g., an internal memory 136 or an external memory 138) that is readable by a machine (e.g., an electronic device 101). For example, a processor (e.g., a processor 120 of an electronic device 101) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to one or more embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one or more embodiments of the disclosure, each component (e.g., a module or a program) of the above-described components may include a single entity or multiple entities, and some of the multiple entities may be separately disposed in different components. According to one or more embodiments of the disclosure, one or more of the above-described components may be omitted, or one or more other components may be added. Alternatively or additionally, a plurality of components (e.g., modules or programs) may be integrated into a single component. In such a case, according to one or more embodiments of the disclosure, the integrated component may still perform one or more functions of each of the plurality of components in the same or similar manner as they are performed by a corresponding one of the plurality of components before the integration. According to one or more embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. A wearable device (101) comprising:

   a first display (250-1) positioned with respect to a left eye of a user;
   a second display (250-2) positioned with respect to a right eye of the user;
   at least one processor (120) comprising processing circuitry; and
   memory, comprising one or more storage mediums, storing instructions,
   wherein the instructions, when executed by the at least one processor (120) individually or collectively, cause the wearable device to:

   display a content having a first displaying size on the first display (250-1) and the second display (250-2), such that the content is perceived in a 3D virtual environment as being positioned at a first depth, and
   in a case that the content is displayed for a time period greater than or equal to a reference time, display the content as a second displaying size on the first display (250-1) and the second display (250-2), which is substantially same as the first displaying size, such that the content is perceived in the 3D virtual environment as being positioned at a second depth greater than the first depth.

2. The wearable device (101) of claim 1, wherein a size of the content in the 3D virtual environment at the first depth in the 3D virtual environment has a first size, and
   wherein the size of the content in the 3D virtual environment at the second depth in the 3D virtual environment has a second size bigger than the first size.

3. The wearable device (101) of claim 1, wherein the first depth represents a first position in the 3D virtual environment in which a focal length from the left eye and the right eye of the user to the content corresponds to a first length, and
   wherein the second depth represents a second position in the 3D virtual environment in which the focal length corresponds to a second length that is longer than the first length.

4. The wearable device (101) of claim 1, wherein the instructions, when executed by the at least one processor (120) individually or collectively, further cause the wearable device to:

   identify whether a function for adjusting of a focal length of the user is activated or deactivated;
   based on identifying that the function for adjusting of the focal length of the user is activated, identify whether the time period is greater than or equal to the reference time; and
   based on identifying that the function for adjusting of the focal length of the user is deactivated, maintain displaying the content having the first displaying size on the first display (250-1) and the second display (250-2) such that the content is perceived in the 3D virtual environment as being positioned at the first depth.

5. The wearable device (101) of claim 1, wherein the instructions, when executed by the at least one processor (120) individually or collectively, further cause the wearable device to:

   obtain, from the user, an input for displaying the content; and
   based on the input, display the content having the first displaying size on the first display (250-1) and the second display (250-2) in response to the input, and

   wherein the first depth is designated by the user.

6. The wearable device (101) of claim 1, wherein the instructions, when executed by the at least one processor (120) individually or collectively, further cause the wearable device to, based on a play speed of the content or capability information adjusting a focal length of the user, identify the reference time, and
   wherein the capability information comprises a range of the focal length.

7. The wearable device (101) of claim 1, wherein the instructions, when executed by the at least one processor (120) individually or collectively, further cause the wearable device to:

   based on a first image and a second image, display, on the first display (250-1) and the second display (250-2), the content having the first displaying size,

wherein the first image is displayed in a first displaying area having the first displaying size of the first display (250-1), and wherein the second image is displayed in a second displaying area having the first displaying size of the second display (250-2), and

based on a third image and a fourth image, display, on the first display (250-1) and the second display (250-2), the content having the second displaying size,

wherein the third image is displayed in a third displaying area having the second displaying size of the first display (250-1), and wherein the fourth image is displayed in a fourth displaying area having the second displaying size of the second display (250-2).

8. The wearable device (101) of claim 7, wherein a first difference between a first coordinate for a designated position of the first image and a second coordinate for the designated position of the second image is greater than a second difference between a third coordinate for the designated position of the third image and a fourth coordinate for the designated position of the fourth image.

9. The wearable device (101) of claim 1, wherein the instructions, when executed by the at least one processor (120) individually or collectively, further cause the wearable device to:

based on an eye calibration of the user, obtain capability information about adjusting a focal length of the user; and based on the capability information, change a size of the content from the first size to the second size and a position of the content in the 3D virtual environment from the first depth to the second depth, and wherein the capability information comprises a range of the focal length of the user.

10. The wearable device (101) of claim 9, wherein the instructions, when executed by the at least one processor (120) individually or collectively, further cause the wearable device to: identify a result of focal length adjustment of the user with respect to the content having the second displaying size changed based on the capability information, wherein the result of focal length adjustment of the user comprises a difference between a focal length of the user calculated based on the second depth and an actual focal length of the user.

11. The wearable device (101) of claim 1, wherein the instructions, when executed by the at least one processor (120) individually or collectively, further cause the wearable device to maintain a value indicating a z-index of the content while a position of the content in the 3D virtual environment is changed from the first depth to the second depth.

12. The wearable device (101) of claim 1, wherein the instructions, when executed by the at least one processor (120) individually or collectively, further cause the wearable device to:

identify whether the content is a floated visual object on the first display (250-1) and the second display (250-2); and based on identifying that the content is the floated visual object, change a position of the content in the 3D virtual environment from the first depth to the second depth.

13. The wearable device (101) of claim 1, wherein the instructions, when executed by the at least one processor (120) individually or collectively, further cause the wearable device to:

based on a camera (510) of the wearable device, identify whether a gazing time of the user is greater than or equal to a reference gazing time, wherein the gazing time indicates a time period during which the user's gaze is positioned in an area corresponding to the content having the first displaying size; and based on identifying that the gazing time is greater than or equal to the reference gazing time, display the content having the second displaying size in the second depth.

14. A method performed by a wearable device (101) comprising a first display (250-1) positioned with respect to a left eye of a user, a second display (250-2) positioned with respect to a right eye of the user, the method comprising:

displaying a content having a first displaying size on the first display (250-1) and the second display (250-2), such that the content is perceived in a 3D virtual environment as being positioned at a first depth, and in a case that the content is displayed for a time period greater than or equal to a reference time, displaying the content as a second displaying size on the first display (250-1) and the second display (250-2), which is substantially same as the first displaying size, such that the content is perceived in the 3D virtual environment as being positioned at a second depth greater than the first depth.

15. A non-transitory computer-readable storage medium, when individually or collectively executed by at least one processor(120) of a wearable device(101) comprising a first display (250-1) positioned with respect to a left eye of a user and a second display (250-2) positioned with respect to a right eye of the user, stores one or more programs including instructions that cause to:

display a content having a first displaying size on the first display (250-1) and the second display (250-2), such that the content is perceived in a 3D virtual environment as being positioned at a first depth, and

in a case that the content is displayed for a time period greater than or equal to a reference time, display the content as a second displaying size on the first display (250-1) and the second display (250-2), which is substantially same as the first displaying size, such that the content is perceived in the 3D virtual environment as being positioned at a second depth greater than the first depth.

FIG. 1

FIG. 2A

FIG. 2B

FIG. 3A

FIG. 3B

FIG. 4A

FIG. 4B

**FIG. 5**

```
                                    ┌─ 600
        ┌─────────────────────────┐
        │      OBTAIN INPUT FOR    │
        │     DISPLAYING CONTENT   │
        └─────────────────────────┘
                    │
                    ▼               ┌─ 605
        ┌─────────────────────────┐
        │ DISPLAY CONTENT HAVING   │
        │  DESIGNATED SIZE WITHIN  │
        │     DESIGNATED AREA      │
        │   OF VIRTUAL ENVIRONMENT │
        └─────────────────────────┘
```

OBTAIN INPUT FOR DISPLAYING CONTENT — 600

DISPLAY CONTENT HAVING DESIGNATED SIZE WITHIN DESIGNATED AREA OF VIRTUAL ENVIRONMENT — 605

EYESIGHT PROTECTION FUNCTION ACTIVATED? — 610

NO → MAINTAIN SIZE AND POSITION OF CONTENT — 615

YES

DISPLAYED TIME PERIOD OF CONTENT IS GREATER THAN OR EQUAL TO REFERENCE TIME? — 620

NO

YES

CHANGE SIZE AND POSITION OF CONTENT — 625

DISPLAY CONTENT BASED ON CHANGED SIZE AND POSITION — 630

FIG. 6

FIG. 7

```
┌─────────────────────────────────────┐
│  OBTAIN CAPABILITY INFORMATION      │ ⌐ 800
│  ABOUT FOCAL LENGTH OF USER         │
└─────────────────────────────────────┘
                  │
                  ▼
┌─────────────────────────────────────┐
│  DISPLAY CONTENT IN STATE OF EYESIGHT│ ⌐ 805
│  PROTECTION FUNCTION BEING ACTIVATED │
└─────────────────────────────────────┘
                  │
                  ▼
┌─────────────────────────────────────┐
│  CHANGE SIZE AND POSITION OF CONTENT │ ⌐ 810
│  BASED ON CAPABILITY INFORMATION     │
└─────────────────────────────────────┘
                  │
                  ▼
┌─────────────────────────────────────┐
│  IDENTIFY RESULT OF ADJUSTING FOCAL  │ ⌐ 815
│  LENGTH OF USER FOR CHANGED CONTENT  │
└─────────────────────────────────────┘
                  │
                  ▼
┌─────────────────────────────────────┐
│      STORE IDENTIFIED RESULT         │ ⌐ 820
└─────────────────────────────────────┘
```

FIG. 8

900

DISPLAY CONTENT HAVING FIRST SIZE IN
FIRST AREA OF VIRTUAL ENVIRONMENT

905

GAZING TIME IS
GREATER THAN OR EQUAL
TO REFERENCE GAZING
TIME?

NO

YES

910

DISPLAY CONTENT HAVING
SECOND SIZE IN SECOND AREA

FIG. 9

DISPLAY CONTENT HAVING FIRST DISPLAYING SIZE ON FIRST DISPLAY AND SECOND DISPLAY, SUCH THAT CONTENT IS RECOGNIZED AS BEING LOCATED AT FIRST DEPTH IN 3D VIRTUAL ENVIRONMENT ~1010

WHEN CONTENT IS DISPLAYED DURING TIME INTERVAL EQUAL TO OR GREATER THAN REFERENCE TIME, DISPLAY CONTENT IN SECOND DISPLAYING SIZE SUBSTANTIALLY THE SAME AS FIRST DISPLAYING SIZE ON FIRST DISPLAY AND THE SECOND DISPLAY, SUCH THAT THE CONTENT IS RECOGNIZED AS BEING LOCATED AT SECOND DEPTH EXCEEDING FIRST DEPTH IN 3D VIRTUAL ENVIRONMENT ~1020

FIG. 10

## INTERNATIONAL SEARCH REPORT

| International application No. |
| --- |
| **PCT/KR2024/003889** |

**A. CLASSIFICATION OF SUBJECT MATTER**

**G06F 3/01**(2006.01)i; **G06F 3/00**(2006.01)i; **G06F 1/16**(2006.01)i; **G06T 19/00**(2011.01)i; **G06V 40/18**(2022.01)i

According to International Patent Classification (IPC) or to both national classification and IPC

**B. FIELDS SEARCHED**

Minimum documentation searched (classification system followed by classification symbols)

G06F 3/01(2006.01); G02B 27/01(2006.01); G06F 3/0481(2013.01); G06F 3/0484(2013.01); H04B 1/40(2006.01); H04N 13/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가상 환경(virtual environment), 웨어러블 장치(wearable device), 시간 (time), 사이즈(size), 깊이(depth), 초점 거리(focus length), 콘텐트(content)

**C. DOCUMENTS CONSIDERED TO BE RELEVANT**

| Category* | Citation of document, with indication, where appropriate, of the relevant passages | Relevant to claim No. |
| --- | --- | --- |
| Y | CN 115686181 A (HUAWEI TECHNOLOGIES CO., LTD.) 03 February 2023 (2023-02-03)<br>See paragraphs [0018], [0029], [0182], [0192] and [0201]. | 1-5,11,13-15 |
| A | | 6-10,12 |
| Y | KR 10-2021-0083016 A (SAMSUNG ELECTRONICS CO., LTD.) 06 July 2021 (2021-07-06)<br>See paragraphs [0042] and [0081]; claim 1; and figure 4b. | 1-5,11,13-15 |
| A | KR 10-1889463 B1 (INDUSTRY-ACADEMIC COOPERATION FOUNDATION, YONSEI UNIVERSITY) 17 August 2018 (2018-08-17)<br>See paragraphs [0064]-[0067]; and figure 4. | 1-15 |
| A | KR 10-2017-0058395 A (FACEBOOK, INC.) 26 May 2017 (2017-05-26)<br>See claim 1. | 1-15 |

✓ Further documents are listed in the continuation of Box C.　　✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 July 2024** | **29 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/003889**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|----------------------|
| A | KR 10-2015-0139745 A (YUN, Jae Woong) 14 December 2015 (2015-12-14)<br>See paragraph [0022]; and figure 2. | 1-15 |

**INTERNATIONAL SEARCH REPORT**
Information on patent family members

International application No.

**PCT/KR2024/003889**

| Patent document cited in search report | | | Publication date (day/month/year) | Patent family member(s) | | | Publication date (day/month/year) |
|---|---|---|---|---|---|---|---|
| CN | 115686181 | A | 03 February 2023 | WO | 2023-001113 | A1 | 26 January 2023 |
| KR | 10-2021-0083016 | A | 06 July 2021 | WO | 2021-133053 | A1 | 01 July 2021 |
| KR | 10-1889463 | B1 | 17 August 2018 | CN | 110998490 | A | 10 April 2020 |
| | | | | JP | 2020-530131 | A | 15 October 2020 |
| | | | | JP | 6916955 | B2 | 11 August 2021 |
| | | | | US | 11571121 | B2 | 07 February 2023 |
| | | | | US | 2020-0337549 | A1 | 29 October 2020 |
| | | | | WO | 2019-027184 | A1 | 07 February 2019 |
| KR | 10-2017-0058395 | A | 26 May 2017 | CN | 107003521 | A | 01 August 2017 |
| | | | | CN | 107003521 | B | 05 June 2020 |
| | | | | EP | 3198396 | A1 | 02 August 2017 |
| | | | | JP | 2017-539108 | A | 28 December 2017 |
| | | | | JP | 6628793 | B2 | 15 January 2020 |
| | | | | US | 10067561 | B2 | 04 September 2018 |
| | | | | US | 2016-0085301 | A1 | 24 March 2016 |
| | | | | WO | 2016-045784 | A1 | 31 March 2016 |
| KR | 10-2015-0139745 | A | 14 December 2015 | | None | | |

Form PCT/ISA/210 (patent family annex) (July 2022)